# EUROPEAN PATENT APPLICATION

(11) **EP 4 592 819 A1**
(43) Date of publication of application: **30.07.2025**
(21) Application number: 23884463.3
(22) Date of filing: 08.09.2023
(51) Int. Cl.: G06F 3/14

(54) **SCREEN MIRRORING METHOD AND ELECTRONIC DEVICE**

(30) Priority: 31.10.2022 CN 202211348614
(71) Applicant: Honor Device Co., Ltd., Shenzhen, Guangdong 518040 (CN)
(72) Inventor: WANG, Dongwei, Shenzhen, Guangdong 518040 (CN)
(74) Representative: MERH-IP Matias Erny Reichl Hoffmann Patentanwälte PartG mbB
(86) International application number: PCT/CN2023/117850
(87) International publication number: WO 2024/093530

(57) **Abstract**

This application provides a screen casting method and an electronic device, and relates to the field of communication technologies and the field of terminal technologies. A specific solution is as follows: After a first device performs screen casting to a second device, the second device displays a first window; the second device displays first image information from the first device in the first window when the first device is in a screen-on state, where the first image information corresponds to an application interface of a first application in the first device; and after the first device switches to a lock screen state or a screen-off state, the second device displays second image information from the first device in the first window, where the second image information also corresponds to the application interface of the first application in the first device. In this way, after the first device performs screen casting to the second device, even if the first device switches from the screen-on state to the screen-off state or the lock screen state, the second device can still normally display an application screen casting window provided by the first device.

## Description

This application claims priority to Chinese Patent Application No. 202211348614.X, filed with the China National Intellectual Property Administration on October 31, 2022 and entitled "SCREEN CASTING METHOD AND ELECTRONIC DEVICE", which is incorporated herein by reference in its entirety.

### TECHNICAL FIELD

Embodiments of this application relate to the field of communication technologies and the field of terminal technologies, and in particular, to a screen casting method and an electronic device.

### BACKGROUND

A plurality of electronic devices work in collaboration to bring convenience to users' life and work. Using collaborative notification as an example, when a mobile phone receives a message, a message notification can not only be displayed on the mobile phone, but can also be streamed to a PC for display. This enables a user to conveniently view the message across devices, thereby improving the efficiency of collaborative work between the devices. Certainly, mere streaming of the message notification between devices is insufficient. The user often needs to process the message notification through the PC after viewing the message notification from the mobile phone on the PC, which requires casting the screen of the mobile phone to the PC.

However, during screen casting between the PC and the mobile phone, if the mobile phone enters a screen-off mode and a lock screen mode, screen casting of the PC may be abnormal.

### SUMMARY

Embodiments of this application provide a screen casting method and an electronic device. During screen casting of a first device to a second device, after the first device switches to a lock screen state or a screen-off state, the second device can still normally display an application screen casting window provided by the first device.

To achieve the objective, the following technical solutions are used in the embodiments of this application.

According to a first aspect, an embodiment of this application provides a screen casting method, applicable to a first device and a second device. The method includes: The second device displays a first window after the first device performs screen casting to the second device; the second device displays first image information from the first device in the first window when the first device is in a screen-on state, where the first image information corresponds to an application interface of a first application in the first device; and after the first device switches to a lock screen state or a screen-off state, the second device displays the second image information from the first device in the first window, where the second image information also corresponds to the application interface of the first application in the first device.

In foregoing embodiments, the first device performs screen casting, such as cross-source screen casting, to the second device when in the screen-on state. After the cross-source screen casting succeeds, the first device may draw the first image information based on the application interface of the first application, and send the first image information to the second device. The second device displays the first image information in the first window. In this way, a user may operate the second device to use the first application installed in the first device. Then, the first device may enter the lock screen state or the screen-off state in response to the operation of the user. The first device may draw the second image information based on the application interface of the first application, and send the second image information to the second device, so that the second device may continue to display the application interface related to the first application in the first window. It may be understood that, the first image information and the second image information both correspond to the application interface of the first application, and may be image information drawn based on the application interface of the first application at different moments. In other words, content displayed by the first image information and content displayed by the second image information may be the same or may be different.

In this way, after the first device switches to the screen-off state or the lock screen state, the first device may continue normally to perform screen casting to the second device. In addition, it also avoids excessive energy consumption caused by prolonged screen-on time when the user is not using the first device, and prevents others from using the unlocked first device without the user's permission.

In some embodiments, after the first device switches to a lock screen state or a screen-off state, the method further includes: The first device configures the first application to not enter a sleep mode in a life cycle, and configures the application interface of the first application to be allowed to be drawn in a first display area in the life cycle, where the first display area is an invisible display area in the first device; and the first device sends the second image information of the first application to the second device, to indicate the second device to display the second image information in the first window, where the second image information is data drawn in the first display area.

In foregoing embodiments, by preventing the first application from entering the sleep mode and maintaining the application interface of the first application visible at the foreground, it is ensured that after the screen of the first device is off or locked, the user can continue to use the first application in the first device through the first window in the second device.

In some embodiments, before the first device performs screen casting to the second device, the method further includes: The first device receives a first message of the first application; the first device forwards the first message to the second device; the second device displays a first control, where the first control is configured to display the first message; the second device sends a first request to the first device in response to an operation of the user on the first control, where the first request includes a first identifier of the first application; and the first device starts screen casting to the second device in response to the first request.

In some embodiments, after screen casting to the second device is started, the method further includes: The first device creates the first display area, and starts the first application; the first device generates the first image information based on image data in the first display area after the application interface of the first application is drawn in the first display area; and the first device sends the first image information to the second device.

In some embodiments, before the first application is started, the method further includes: The first device marks the first application with a first flag; and before the first device configures the first application to not enter a sleep mode in a life cycle, and configures the application interface of the first application to be allowed to be drawn in a first display area in the life cycle, the method further includes: The first device determines that the first application has the first flag.

In some embodiments, before the first device switches to a lock screen state or a screen-off state, the method further includes: In response to an operation of a user indicating to lock the screen or turn off the screen, the first device controls to power off only a display screen of the first device, or displays only a lock screen layer on the display screen, where a service running state corresponding to the display screen remains unchanged.

In some embodiments, the first display area is marked with a second flag, and before the first device switches to a lock screen state or a screen-off state, the method further includes: The first device determines, when the first device detects that a condition that the screen is automatically off is satisfied, that the first display area has the second flag; and the first device controls to power off only a display screen of the first device, or displays only a lock screen layer on the display screen, where a service running state corresponding to the display screen remains unchanged.

In some embodiments, before the first device switches to a lock screen state or a screen-off state, the method further includes: The first device determines not to draw a lock screen layer in the first display area.

In some embodiments, before the first device switches to a lock screen state or a screen-off state, the method further includes: The first device determines that the first display area does not mirror content in a second display area, where the second display area is a visible display area in the first device.

According to a second aspect, an embodiment of this application provides a screen casting method, applicable to a first device. The method includes: The first device performs screen casting to a second device; the first device sends first image information corresponding to a first application to the second device when the first device is in a screen-on state, to indicate the second device to display the first image information in a first window; after the first device switches to a lock screen state or a screen-off state, the first device sends second image information corresponding to the first application to the second device, to indicate the second device to display the second image information in the first window, where both the first image information and the second image information are application interfaces of the first application.

In some embodiments, after the first device switches to a lock screen state or a screen-off state, the method further includes: The first device configures the first application to not enter a sleep mode in a life cycle, and configures the application interface of the first application to be allowed to be drawn in a first display area in the life cycle, where the first display area is an invisible display area in the first device; and the first device generates the second image information based on content drawn in the first display area.

In some embodiments, before the first device performs screen casting to a second device, the method further includes: The first device receives a first message of the first application; the first device forwards the first message to the second device; and starting screen casting to the second device after receiving a first request sent by the second device, where the first request is request information for performing screen casting for the first application, and the first request carries a first identifier of the first application.

In some embodiments, before the first device sends first image information corresponding to a first application to the second device, the method further includes: The first device creates the first display area, and starts the first application; and

the first device generates the first image information based on image data in the first display area after the application interface of the first application is drawn in the first display area.

In some embodiments, before the first application is started, the method further includes: The first device marks the first application with a first flag; and before the first device configures the first application to not enter a sleep mode in a life cycle, and configures the application interface of the first application to be allowed to be drawn in a first display area in the life cycle, the method further includes: The first device determines that the first application has the first flag.

In some embodiments, the first display area is marked with a second flag, and before the first device switches to a lock screen state or a screen-off state, the method further includes: In response to an operation of a user indicating to lock the screen or turn off the screen, the first device controls to power off only a display screen of the first device, or displays only a lock screen layer on the display screen, where a service running state corresponding to the display screen remains unchanged.

In some embodiments, the first display area is marked with a second flag, and before the first device switches to a lock screen state or a screen-off state, the method further includes: The first device determines, when the first device detects that a condition that the screen is automatically off is satisfied, that the first display area has the second flag; and the first device controls to power off only a display screen of the first device, or displays only a lock screen layer on the display screen, where a service running state corresponding to the display screen remains unchanged.

In some embodiments, before the first device switches to a lock screen state or a screen-off state, the method further includes: The first device determines not to draw a lock screen layer in the first display area.

In some embodiments, before the first device switches to a lock screen state or a screen-off state, the method further includes: The first device determines that the first display area does not mirror content in a second display area, where the second display area is a visible display area in the first device.

According to a third aspect, an embodiment of this application provides an electronic device. The electronic device includes one or more processors and a memory, the memory is coupled to the processor, the memory is configured to store computer program code, the computer program code includes computer instructions, and when the one or more processors execute the computer instructions, the one or more processors are configured to perform the method according to the first aspect and possible embodiments thereof; or when the one or more processors execute the computer instructions, the one or more processors are configured to perform the method according to the second aspect and possible embodiments thereof.

According to a fourth aspect, an embodiment of this application provides a computer storage medium, including computer instructions. The computer instructions, when run on an electronic device, cause the electronic device to perform the method according to the first aspect and possible embodiments thereof; or the computer instructions, when run on an electronic device, cause the electronic device to perform the method according to the second aspect and possible embodiments thereof.

It may be understood that, the electronic device, the computer storage medium, and the computer program product provided in the aspects are all applied to the corresponding method. Therefore, for beneficial effects that can be achieved by the electronic device, the computer storage medium, and the computer program product, refer to beneficial effects in the corresponding method. Details are not described herein again.

### BRIEF DESCRIPTION OF DRAWINGS

FIG. 1A and FIG. 1B are a schematic diagram of a message streaming scenario according to an embodiment of this application;
FIG. 2A and FIG. 2B are a schematic diagram of interface display of cross-source screen casting according to an embodiment of this application;
FIG. 3 is a schematic diagram of interface display of cross-source screen casting according to an embodiment of this application;
FIG. 4 is a schematic diagram of a principle of cross-source screen casting according to an embodiment of this application;
FIG. 5A and FIG. 5B are a schematic diagram of interface display of cross-source screen casting according to an embodiment of this application;
FIG. 6A and FIG. 6B are a schematic diagram of interface display of cross-source screen casting according to an embodiment of this application;
FIG. 7 is a flowchart of a determining mechanism according to an embodiment of this application;
FIG. 8A and FIG. 8B are a schematic diagram of interface display of cross-source screen casting according to an embodiment of this application;
FIG. 9 is a diagram of a software architecture of an electronic device according to an embodiment of this application;
FIG. 10 is a diagram of a specific implementation process of a screen casting method according to an embodiment of this application;
FIG. 11A and FIG. 11B are a diagram of a specific implementation process of another screen casting method according to an embodiment of this application;
FIG. 12 is a diagram of a specific implementation process of another screen casting method according to an embodiment of this application;
FIG. 13A, FIG. 13B, and FIG. 13C are a diagram of a specific implementation process of another screen casting method according to an embodiment of this application;
FIG. 14 is a diagram of a specific implementation process of another screen casting method according to an embodiment of this application;
FIG. 15 is a diagram of a specific implementation process of another screen casting method according to an embodiment of this application;
FIG. 16 is a schematic diagram of a principle according to an embodiment of this application; and
FIG. 17 is a schematic diagram of another principle according to an embodiment of this application.

### DESCRIPTION OF EMBODIMENTS

The following clearly and completely describes technical solutions in embodiments of this application with reference to the accompanying drawings in embodiments of this application. In the descriptions of this embodiment of this application, "/" indicates "or" unless otherwise specified. For example, A/B may represent A or B. In the specification, "and/or" describes only an association relationship between associated objects, and represents that three relationships may exist. For example, A and/or B may represent the following three cases: Only A exists, both A and B exist, and only B exists. In addition, in the descriptions of this embodiment of this application, "plurality" indicates two or more.

It should be understood that, the terms "first", "second", and the like in the specification, claims, and accompanying drawings of this application are used to distinguish between different objects, and are not used to describe a specific sequence. In addition, the terms "include", "have", and any variant thereof are intended to cover a non-exclusive inclusion. For example, processes, methods, systems, products, or devices including a series of steps or units is not limited to the listed steps or units, but instead, optionally include other steps or units not listed, or optionally include other steps or units inherent to the processes, methods, products, or devices.

An "embodiment" in this application means that specific features, structures, or characteristics described with reference to this embodiment may be included in at least one embodiment of this application. The phrase shown at various positions in the specification may not necessarily refer to a same embodiment, nor an independent or optional embodiment exclusive from another embodiment. A person skilled in the art explicitly or implicitly understands that embodiments described in this application may be combined with other embodiments.

For example, an embodiment of this application provides a system, including a plurality of electronic devices, such as a device 1, a device 2, and a device 3. The electronic devices (that is, the device 1, the device 2, and the device 3) in the system may belong to a same local area network.

The local area network may be a wireless communication network, for example, a wireless local area network (wireless local areanetworks, WLAN), a wireless fidelity point to point (wireless fidelity point to point, Wi-Fi P2P), a Bluetooth network, a zigbee network, an infrared (infrared, IR) or near field communication (near field communication, NFC) network, or the like. For another example, the local area network may alternatively be a wired communication network, for example, a communication network established by a video graphics array (video graphics array, VGA), a digital visual interface (digital visual interface, DVI), a high definition multimedia interface (high definition multimedia interface, HDMI), a data transmission line, or the like. For another example, the local area network may alternatively be a remote network.

After the device 1, the device 2, and the device 3 trust each other and implement mutual recognition, the system including the device 1, the device 2, and the device 3 may alternatively be referred to as a trust ring. In addition, for a process in which trust and mutual recognition are performed between devices, refer to the related technologies. For example, determining may be performed based on one or more of whether the devices have a same system account to log in to, whether authorization is already performed, and whether a near field communication manner is used, and the like. Details are not described herein again.

It may be understood that, data may be securely shared between a plurality of electronic devices within a same trust ring, where the shared data includes, but is not limited to, message reminders, message records, and user information, device types, running states of various applications, identifiers of various applications, and synchronization of identifiers of recently used applications of other electronic devices, and the like.

In this way, within the trust ring, a variety of collaborative services, for example, services such as collaborative calling, collaborative notification, screen casting, and the like, may be implemented.

Using collaborative notification as an example, within the trust ring, when the device 1 receives a message notification, the device 1 not only can display the message notification, but also can stream the message notification to the device 2 and/or the device 3 for display. This enables a user to conveniently view the message across the devices, thereby improving the efficiency of collaborative work between devices. Similarly, the device 2 may also stream the received message notification to the device 1 and/or the device 3, and the device 3 may also stream the received message notification to the device 1 and/or the device 2.

Certainly, mere streaming of the message between devices is insufficient. The user often needs to process the message notification through the device 2 after viewing the message notification from the device 1 on the device 2, which requires casting the screen of the device 1 to the device 2.

Generally, a screen casting scenario includes a source device and a target device, and a protocol is used between the source device and the target device. This enables content on the source device to be displayed on the target device, which means that the source device performs screen casting to the target device. There are common protocols such as a digital living network alliance (Digital Living Network Alliance, DLNA) protocol, a Chromecast protocol, a Miracast protocol, an Airplay protocol, and the like. The source device may be a mobile phone, a tablet computer, a PC, a watch, or the like. The target device may be a tablet computer, a PC, a television, or the like.

It may be understood that, the source device and the target device may have other names, for example, the source device may be referred to as an active screen casting device, and the target device may be referred to as a passive screen casting device; or the source device may be referred to as a first electronic device, and the target device may be referred to as a second electronic device, or the like. This is not limited in this application.

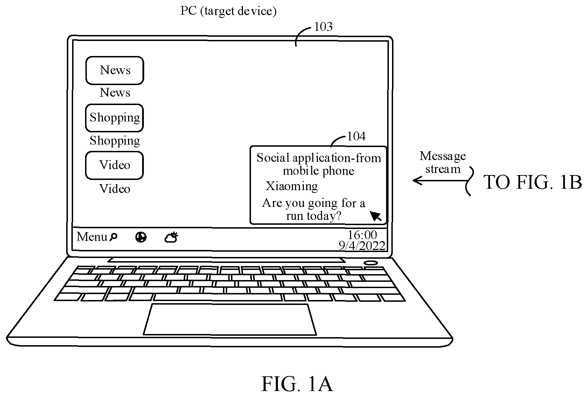

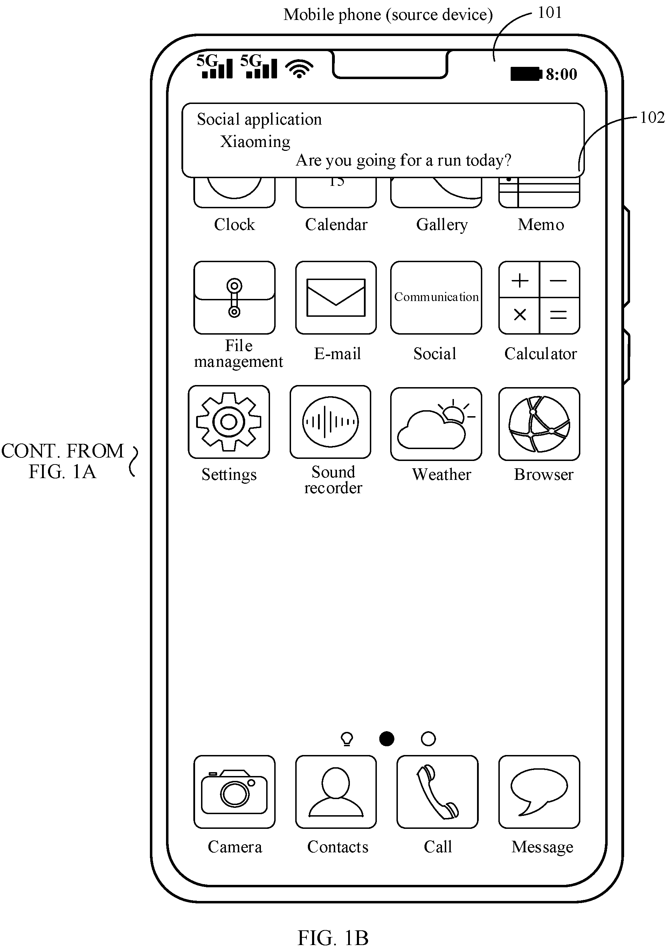

As shown in FIG. 1, an example in which the source device is a mobile phone and the target device is a PC is used. After the mobile phone and the PC belong to a same local area network and complete trust and mutual recognition, the mobile phone and the PC belong to a same trust ring, that is, a communication channel configured to stream a message may be established between the mobile phone and the PC.

In some embodiments, a plurality of types of application programs may be installed in the mobile phone. During operation, the mobile phone may receive an application message pushed by each of the application programs, and the application message is from a message server corresponding to the application program.

For example, a social application may be installed in the mobile phone, and the mobile phone may receive an application message pushed by the social application, for example, a message "Are you going for a run today?" sent by a contact Xiaoming in the social application.

After receiving the application message pushed by the application program, if the mobile phone is in an unlocked state and a screen-on state, the mobile phone may display prompt information in a current interface. For example, when the mobile phone receives the application message pushed by the social application, if the current interface of the mobile phone is a main interface 101, a notification bubble 102 is displayed in the main interface 101, and the notification bubble 102 is configured to display the application message received by the mobile phone.

Then, the mobile phone may stream the application message (for example, "Are you going for a run today?" pushed by the social application) to the PC through the communication channel that is between the mobile phone and the PC and that is configured to stream the message.

In some embodiments, the PC may display the prompt information of the application message after receiving the application message from the mobile phone. The prompt information may be displayed on a desktop of the PC in a form of a message notification control. For example, the message notification control may be, for example, a floating window, a message bubble, a message card, or the like. Certainly, a display form thereof is not specifically limited in this embodiment of this application. For example, as shown in FIG. 1, a message card 104 is displayed on a desktop 103, and the message card 104 is configured to display related content of the application message. The related content may be that the application message comes from the mobile phone, the application message comes from the social application, main content of the application message, or the like. It may be understood that, a display position of the message card 104 is not specifically limited in this embodiment of this application.

In a scenario shown in FIG. 1, if the user is using the PC, the message card 104 displayed on the desktop 103 may prompt the user to notice that the mobile phone currently receives the application message. In this way, even if the user is not currently using the mobile phone directly, or the mobile phone is not around, the user can learn brief content of the application message, to avoid missing of the message.

In some embodiments, the message card 104 may have a display time limit. For example, if the display time limit is preset to a duration 1, the PC starts to display the message card 104 in response to the application message forwarded by the mobile phone. If a duration for which the message card 104 is displayed exceeds the duration 1, and it is not detected that the user selects the message card 104, the PC may cancel display of the message card 104.

For example, when a display screen of the PC is a touchscreen, if the PC detects that the user is in contact with a display area 1 in the touchscreen, the PC determines that the user indicates to select the message card 104. The display area 1 is an area that displays the message card 104 on the touchscreen. For another example, when the PC is connected to a mouse, if it is detected that a cursor corresponding to the mouse is located within the display area 1, and a confirmation instruction is input, the PC determines that the user indicates to select the message card 104.

In some embodiments, after the PC displays the message card 104, the user may process the application message by operating the PC, or may choose to process the application message by directly operating the mobile phone.

For the manner of processing the application message by directly operating the mobile phone, refer to the related technologies. For example, the mobile phone may run the social application at the foreground in response to an operation of the user tapping the notification bubble 102, and display an application interface including the social message. In this way, the user may reply to the application message by performing an operation on the application interface. For another example, the mobile phone displays the application interface of the social application in response to an operation of the user indicating to start the social application. In this way, the user can view the application message or reply to the application message by performing an operation on the application interface provided by the social application.

In addition, when the PC is selected to process the application message, screen casting between the mobile phone and the PC is triggered. For example, the user may select the message card 104 on the PC. After the PC can detect that the user selects the message card 104, the PC may remotely control the mobile phone to run the social application. After the social application enters the running state, the PC can display a screen casting window on the desktop 103. After the PC displays the screen casting window, the user may operate the mobile phone, for example, operate the mobile phone to process the application message through the screen casting window in the PC.

The screen casting window may be configured to synchronously display the current interface of the mobile phone. For example, when the current interface of the mobile phone is the application interface of the social application, the screen casting window also displays the application interface. This is same-source screen casting. Alternatively, the current interface of the mobile phone may not be synchronously displayed, for example, the mobile phone displays the main interface, and the screen casting window displays the application interface. This is cross-source screen casting.

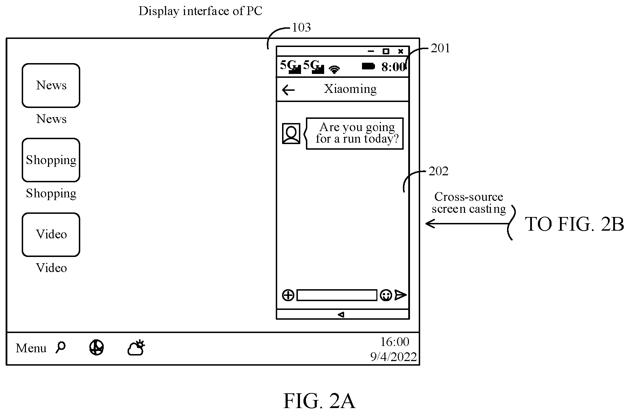

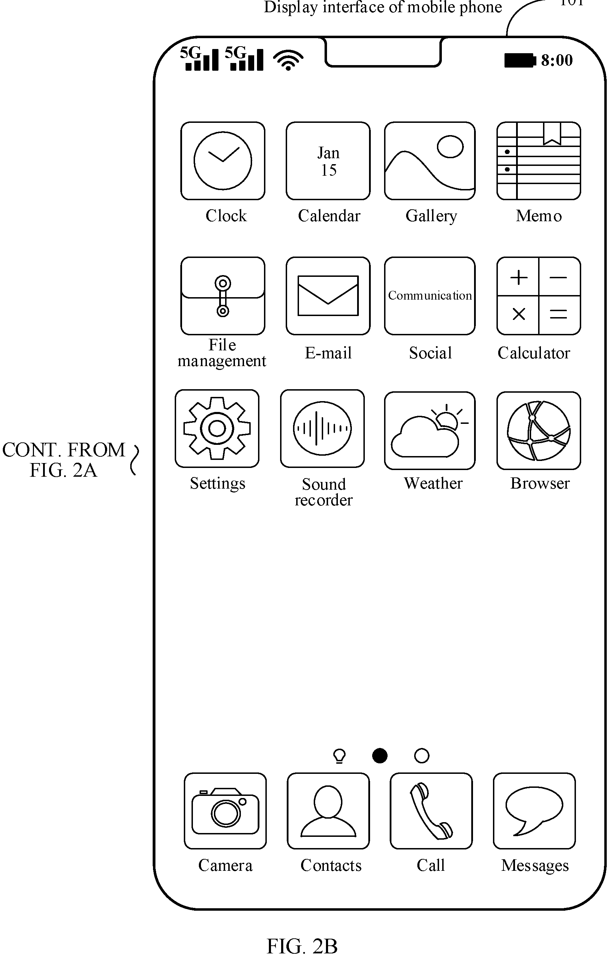

Referring to FIG. 2, FIG. 2 describes interface display of the cross-source screen casting in the scenario.

In an implementation, after the PC determines that the user selects the message card 104, the cross-source screen casting may be implemented through data interaction between the PC and the mobile phone. As shown in FIG. 2, cross-source screen casting is started after the user selects the message card 104, a display screen of the mobile phone still displays the main interface 101, and a screen casting window 201 on the display screen of the PC displays an application interface 202 corresponding to the application message.

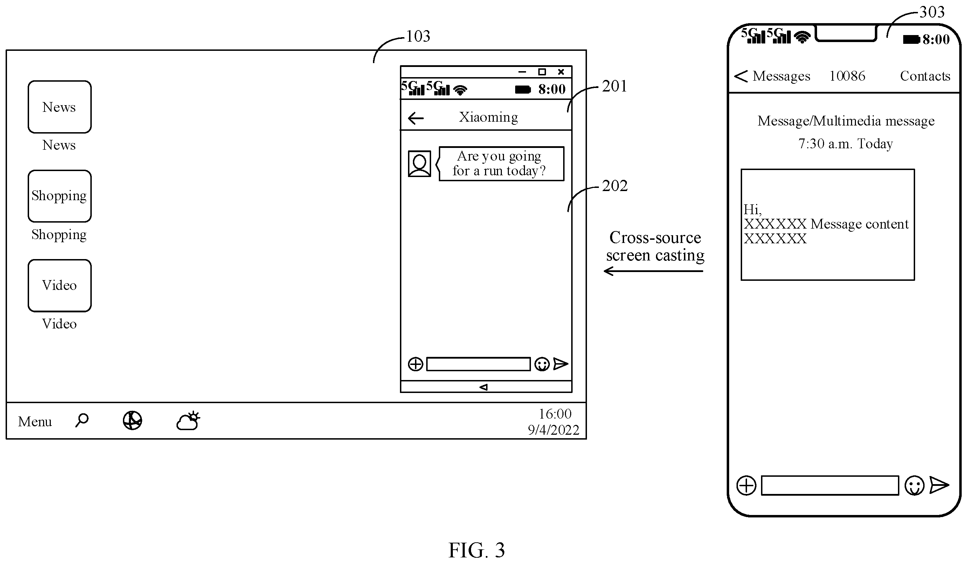

Thereafter, content displayed on the screen casting window does not change synchronously with content displayed on the display screen of the mobile phone. For example, referring to FIG. 3, the display screen of the mobile phone is switched to display an information application interface 303, and the screen casting window 201 on the display screen of the PC still displays the application interface 201 corresponding to the application message.

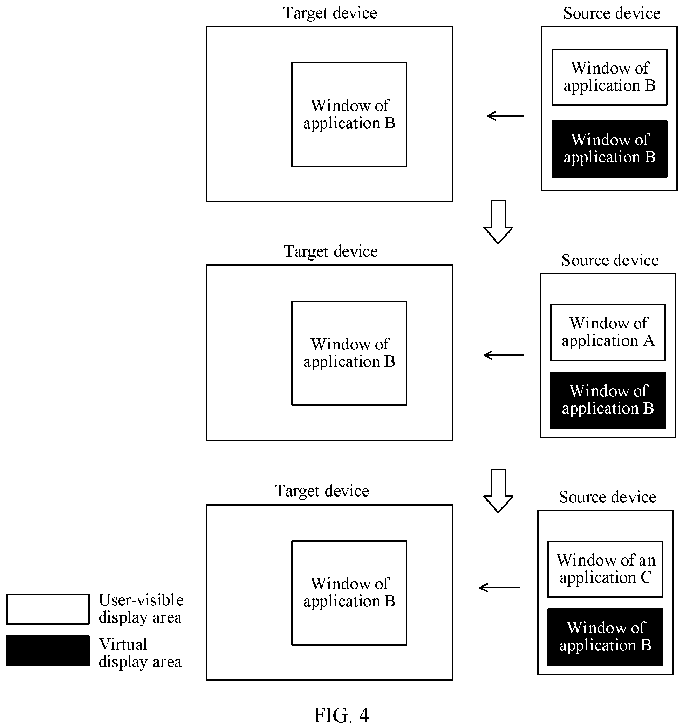

Referring to FIG. 4, FIG. 4 is a schematic diagram of a principle of cross-source screen casting in FIG. 2 and FIG. 3. In a cross-source screen casting scenario, when the source device performs screen casting to the target device, display information on the target device is not synchronized with display information at the foreground of the source device. A window of an application B is displayed on the source device. When casting the window of the application B to the target device, the source device displays the window of application B in a created virtual display area (VirtualDisplay). Content of the virtual display area (for example, referred to as a first display area) is invisible to the user, and may be cast to the target device for display. In addition to the virtual display area, the source device further includes a user-visible display area (for example, referred to as a second display area). When the source device casts the window of the application B to the target device, the user-visible display area displays a window of an application A, that is, the foreground of the source device displays the window of the application A. It is assumed that the user-visible display area on the source device is switched from the window of the application A to a window of an application C, that is, the foreground of the source device displays the window of the application C. In this case, the window of the application B is still displayed on the target device.

It may be understood that, a cross-source screen casting manner has better isolation than same-source screen casting. For example, in the cross-source screen casting manner, independent control screens (that is, the display screen of the source device and a display screen of the target device) may be provided for the user, to process different applications. In this way, after the user casts the window of the application B to the target device for display, the source device operates the application A, or switches from the window of the application A to the window of the application C, and the user can still perform an operation for the application B on the target device. Therefore, the cross-source screen casting releases control of display information of the source device over display information of the target device, thereby enhancing the reusability of the plurality of devices, and allowing the user to perform operations on different applications on different devices through screen casting. However, in a same-source screen casting manner, content displayed in the screen casting window changes synchronously with content displayed on the display screen of the mobile phone. In this embodiment of this application, the cross-source screen casting scenario is used as an example for description.

FIG. 1 and FIG. 2 described above are used as examples to describe a process in which after receiving the message notification, the mobile phone streams the message notification to the PC, and then the user operates the PC and selects the message card displaying the message notification, to trigger the mobile phone to perform cross-source screen casting to the PC.

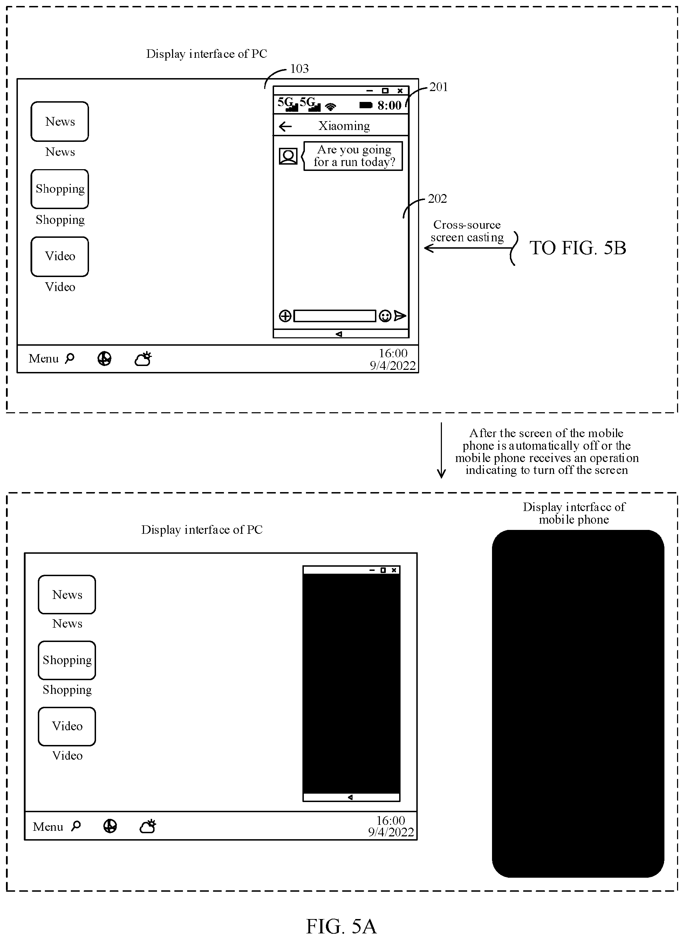

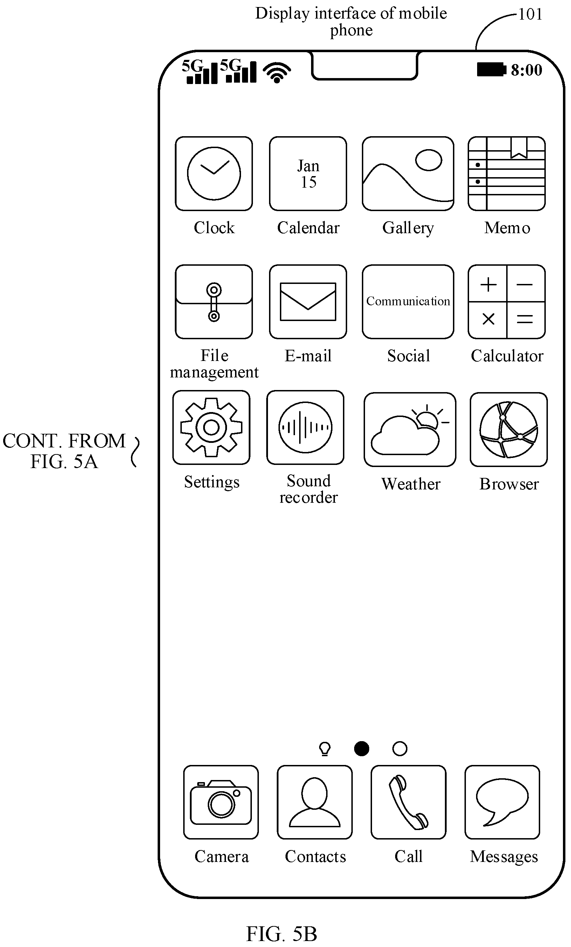

During the cross-source screen casting, as shown in FIG. 5, when the PC displays the screen casting window, the mobile phone is in a screen-on state and an unlocked state. In this scenario, the user interacts with the social application in the mobile phone through the screen casting window in the PC. In other words, the user can use the PC and the mobile phone at the same time by only operating the PC. When the user operates the PC, the user does not directly interact with the mobile phone, but the mobile phone is in the screen-on state and the unlocked state for a long time. This not only consumes power, but is also prone to privacy leakage. In this case, the user usually chooses to tap a lock screen key, to indicate the mobile phone to enter the screen-off state. In addition, if the mobile phone does not detect a user operation for a long time, the mobile phone automatically enters the lock screen state. In related embodiments, when the mobile phone performs screen casting to the PC, that is, after the PC already normally displays the screen casting window (where the screen casting window includes a cast application interface), if the mobile phone as the source device enters the screen-off state, display of the screen casting window in the PC is directly affected. As shown in FIG. 5, after the mobile phone enters the screen-off state, the display screen of the mobile phone is blackened, and at the same time, the screen casting window in the PC is also blackened. This may directly affect the user in remotely controlling the mobile phone through the PC. It should be noted that, the blackened refers to a state in which the display screen does not light up or only a screen saver image is displayed.

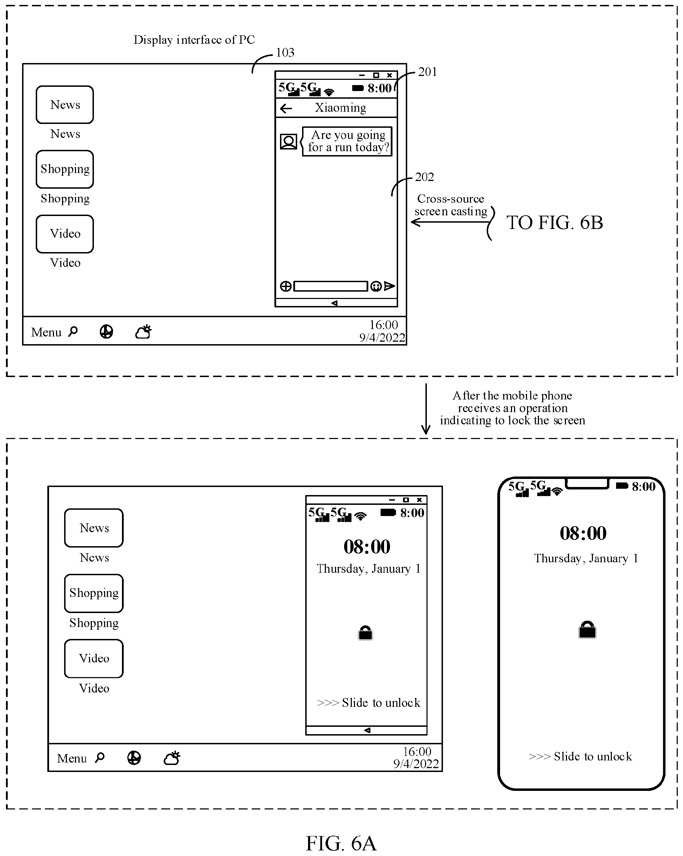

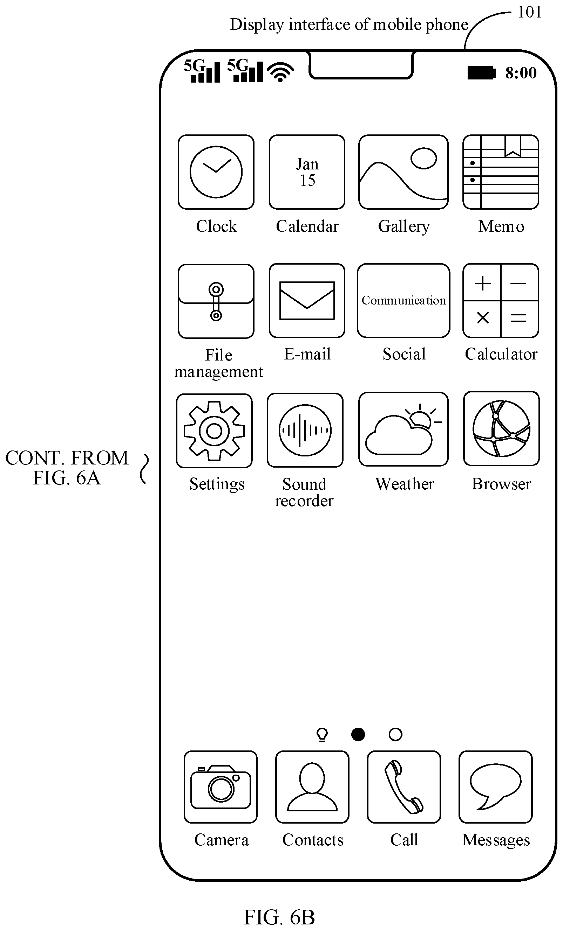

During the cross-source screen casting, as shown in FIG. 6, when the PC displays the screen casting window, the mobile phone is also in the screen-on state and the unlocked state. If the mobile phone receives an of the user indicating to lock the screen, as shown in FIG. 6, the mobile phone enters the lock screen state and displays a lock screen layer. At the same time, the screen casting window in the PC also displays the lock screen layer. This may directly affect the user in remotely controlling the mobile phone through the PC.

To resolve the problem, and enable the user to continue to start the application screen casting window on the target device when the source device is in the lock screen state or the screen-off state, the embodiments of this application provide a screen casting method and an electronic device, to provide a convenient and efficient screen casting experience to the user.

For example, the source device is a mobile phone, and the target device is a PC. As shown in FIG. 1, after receiving the application message streamed by the mobile phone, the PC may display the corresponding message card 104 on the main interface 103. Certainly, the PC may also receive one or more application messages streamed from any device in the same trust ring. For example, the PC may display an information list window in response to a user operation, and the information list window may collectively display received message notifications, or collectively display received and unprocessed message notifications. In an implementation, the message notification may also be displayed in the information list window in a form of the message card.

In some embodiments, if the PC detects a specified operation, for example, detects an operation of the user indicating to display the information list window, the information list window may be displayed on the main interface. The information list window may display application messages, and the like from different devices. It may be understood that, the application messages displayed in the information list window are all information recently received by the PC from other devices in the trust ring.

Similar to the message card displayed on the desktop, when the PC detects that the user selects any message card in the information list window, a device corresponding to the message card may be triggered to perform screen casting. For example, if an application message displayed by a message card a comes from the mobile phone in the trust ring when the message card a is selected, the mobile phone may be triggered to perform screen casting to the PC.

Certainly, after the PC indicates to perform screen casting to a corresponding device, screen casting may fail. For example, when an application program corresponding to the message card is protected by an application lock, screen casting fails. For another example, when a channel for screen casting is occupied by another device, screen casting fails. For another example, when the network is instable, screen casting fails.

First, the application lock refers to that the user of the source device sets protection for an application to protect security or privacy of the application, and the application can be opened only when a preset password, fingerprint, or the like is entered. In consideration of the security and privacy of the source device, in some possible embodiments, before actual screen casting is performed, it may be determined whether the source device optionally protects an application program a (for example, the application program corresponding to the message card selected by the user on the PC). If the source device sets the application lock for the application program a, it indicates that an owner of the source device expects to unlock the application program a by entering a password, a fingerprint, or the like each time the application program is accessed. In this case, for this type of application with strong privacy-protection, starting screen casting directly on the target device side is not suitable when the source device is in the lock screen and the screen-off state. This violates the original intention of the user to set the application lock.

For example, after detecting that the user selects the message card, the PC sends query information 1 to the device (for example, the mobile phone) corresponding to the message card, where the query information 1 is configured to query whether the application lock is configured for an information application in the mobile phone. If the application lock is configured for the information application in the mobile phone, the mobile phone sends feedback information 1 to the PC, where the feedback information 1 indicates that the information application is currently protected by the application lock. In this way, after receiving the feedback information 1, the PC may display prompt information 1, where the prompt information 1 is configured to prompt the user that the application program corresponding to the selected message card is protected by the application lock. For example, the prompt information may be text "The information application is protected by the application lock, please go to the mobile phone to unlock the application lock". In addition, the prompt information 1 may be displayed on the PC in a form of a floating window or a card, and a display form of the prompt information is not limited in this embodiment of this application.

In addition, the source device may establish a screen casting connection with the target device in a WLAN manner, a Wi-Fi P2P manner, or the like. For detailed establishment of the screen casting connection, refer to the manner in which the source device establishes a communication connection with the target device. Details are not described herein again. For ease of description, the screen casting connection is established in the Wi-Fi P2P manner in following embodiments.

In some embodiments of this application, after detecting that the user selects the message card, the PC determines whether a screen casting communication channel (Wi-Fi P2P channel) between the source device (that is, the mobile phone) corresponding to the message card and the target device (that is, the PC) is already occupied by another service. The source device and the target device establish the screen casting connection through the screen casting channel for data transmission, to implement content mirroring between two or more electronic devices. When the source device and the target device establishes another service based on Wi-Fi P2P, such as PC collaboration or device sharing, the screen casting channel corresponding to the source device and the peer device is occupied. Consequently, the source device cannot perform screen casting to the target device based on the Wi-Fi P2P.

For example, when the PC determines that the screen casting channel (Wi-Fi P2P) between the PC and the mobile phone is occupied, the starting of screen casting fails, and prompt information 2 is displayed. The prompt information 2 exemplarily prompts the user that "Screen casting connection conflict, please disconnect from another device and try again", to prompt the user to go to the source device (the mobile phone) or the target device (the PC) to disconnect the screen casting from another device. The prompt information 2 may be displayed on the PC in the form of the floating window or the card, and the display form of the prompt information is not limited in this embodiment of this application.

Then, in some embodiments of this application, after detecting that the user selects the message card, the PC determines whether a network state of the source device (that is, the mobile phone) corresponding to the message card satisfies a screen casting requirement. The network state includes a flow entry matching state, a data packet execution port load state, a total quantity of lost/forwarded/received data packets, a data packet TTR failure, and the like, any network state that may occur in the network is included, and this is not limited herein. It may be understood that, the network state may affect quality of service of the screen casting, and a minimum network state threshold that satisfies a screen casting condition may optionally exist on the PC. If the PC determines that a current network state is lower than the minimum network state threshold, it is considered that the current network state cannot satisfy the screen casting requirement, causing screen casting failure.

When the PC determines that the current network state does not satisfy the screen casting requirement, the starting of screen casting fails, and prompt information 3 is displayed. The prompt information 3 may prompt the user to wait for the network to stabilize before attempting to trigger the source device to perform screen casting. For example, the user is prompted with "The network is unstable, please try again", to prompt the user to adjust and optimize the network state.

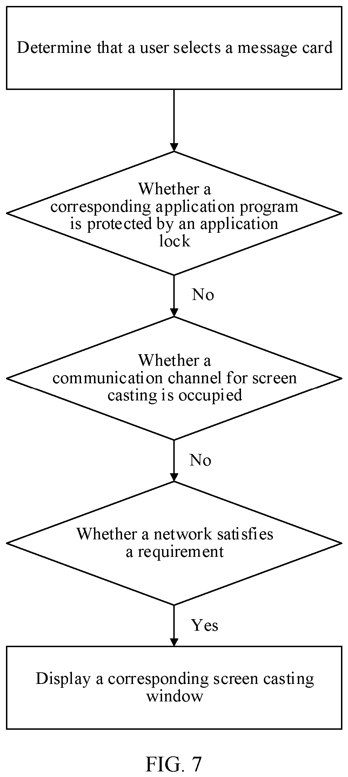

It may be understood that, the three scenarios are merely examples, and are not intended to limit this embodiment of this application. That the PC determines whether a corresponding application program is protected by the application lock, whether the screen casting channel is occupied, and whether the network state satisfies the screen casting requirement are not operations necessarily performed in this embodiment of this application, and a determining sequence is not limited. In some embodiments, referring to FIG. 7, FIG. 7 is a flowchart of a possible determining mechanism. In response to an operation of the user clicking the message card, the PC sequentially determines at each determining node whether the application lock is set, whether the screen casting channel is occupied, and whether the network state satisfies the screen casting requirement. For example, as long as there is a determining result triggering the scenario in which the starting of screen casting fails, this round of determining is terminated. After performing adjustment based on the prompt, the user may click the message card again, to trigger a new round of determining. Certainly, in some embodiments, a determining sequence in the determining mechanism may be adjusted, a determining process may stay at a specific determining node after the determining node triggers a screen casting starting failure, and whether a condition for entering a next determining node is satisfied is continuously detected. The user performs adjustment based on the prompt, and when the condition for entering the next determining node is satisfied, the determining process automatically enters the next determining node.

It may be understood that, FIG. 7 exemplarily shows that after the PC detects that the user selects the message card, the PC may first check whether the corresponding application program is protected by the application lock (which may be referred to as application lock detection), then check whether a communication channel configured for screen casting is occupied (which may be referred to as channel detection), and finally check whether a network condition satisfies a requirement (which may be referred to as network detection for short). Actually, in this embodiment of this application, a sequence of the plurality of detections is not limited. In other words, in some embodiments, the PC may alternatively first check whether the communication channel configured for screen casting is occupied, then check whether the corresponding application program is protected by the application lock, and finally detect the network condition.

In another possible embodiment, the PC may alternatively synchronously perform application lock detection, channel detection, and network detection, and display corresponding prompt information when an obtained detection result indicates that at least one of detected items triggers the screen casting failure. For example, if the obtained detection result indicates that the application program is protected by the application lock and the communication channel is occupied, the PC synchronously displays the prompt information 1 and the prompt information 2.

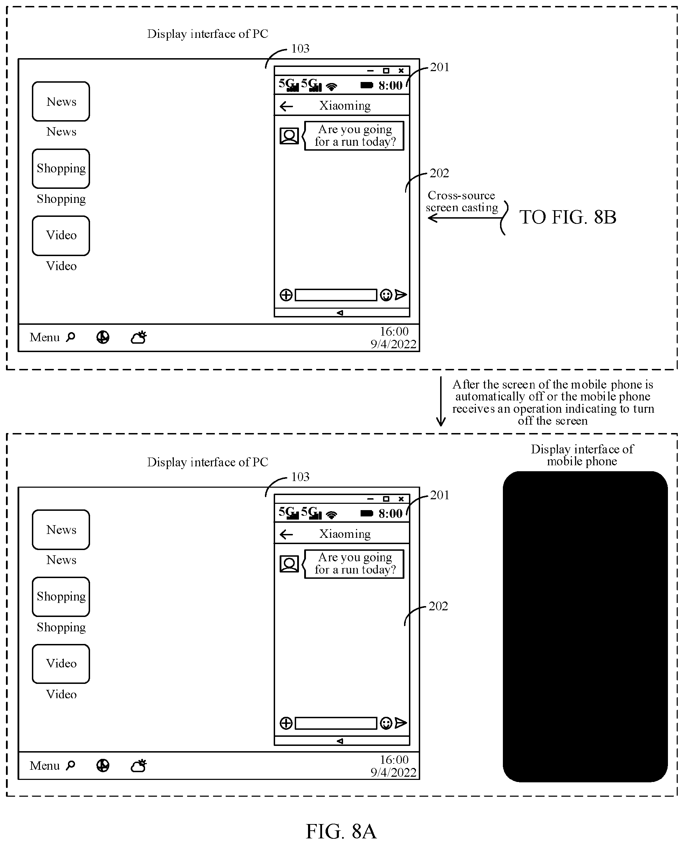

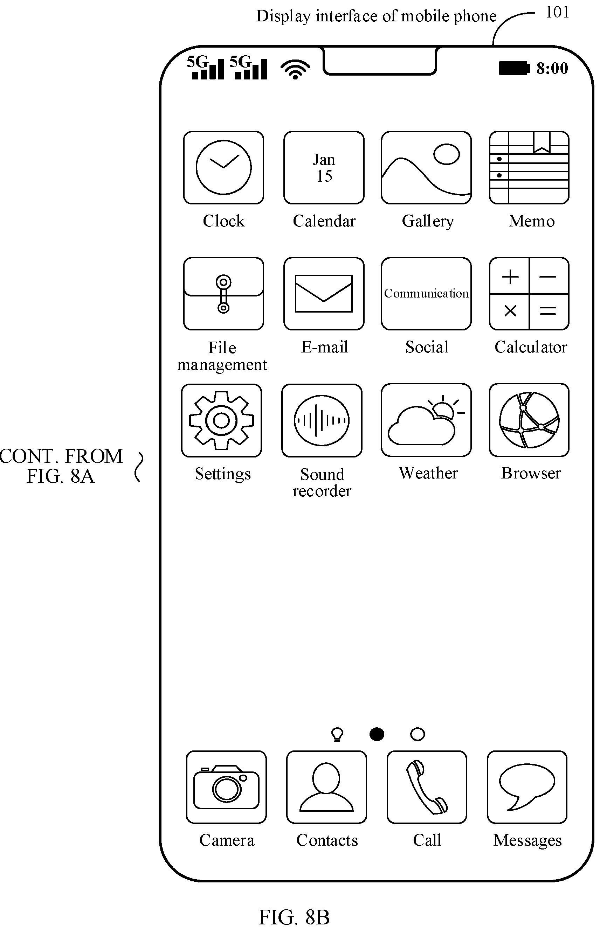

Certainly, when a detection result indicates that none of the detection items triggers the screen casting failure, the PC determines that the mobile phone already has the screen casting condition. In this way, as shown in FIG. 8, the PC may display the screen casting window 201. The screen casting window 201 is configured to display the application interface of the social application in the mobile phone. The PC may display corresponding prompt information in the case of the screen casting failure.

In some other embodiments, the source device may enable a distributed authentication function. In other words, when the source device (for example, the mobile phone) enables the distributed authentication function and is configured with an unlock password, if the target device (PC) determines, through the several detections (for example, the application lock detection, the communication channel detection, and the network detection), that the source device already has the screen casting condition, the target device may display the screen casting window. In this case, the screen casting window is configured to display an unlock verification interface. The unlock password may be an authentication password configured to unlock the lock screen state of the mobile phone.

For example, after the PC detects that the user selects the message card 104, if the PC determines that the mobile phone already has the screen casting condition, the PC may display the screen casting window 201. The screen casting window 201 may first display the unlock verification interface. In this way, after the PC receives the unlock password of the mobile phone entered by the user, and the unlock password is authenticated, the screen casting window 201 is controlled to switch to display "information prompting to wait". During displaying "information prompting to wait", the mobile phone starts the social application in response to an indication of the PC, and draws the application interface of the social application in a virtual interface, to obtain a drawing parameter of each display object in the virtual interface. The virtual interface is a PC-oriented service, and is invisible on the display screen of the mobile phone. The drawing parameter is a related parameter configured to render an interface, and may also be referred to as display information in some examples.

After completing drawing of the application interface, the mobile phone sends corresponding display information to the PC, and indicates the PC to render the application interface in the screen casting window 201. In this way, the screen casting window 201 switches to display the application interface (for example, an application interface including an application message corresponding to the message card 104) of the social application, that is, the mobile phone casts the virtual interface to the screen casting window 201 of the PC. In other words, after the PC receives the unlock password of the mobile phone entered by the user, and the unlock password is authenticated, the mobile phone starts cross-source screen casting to the PC.

In an implementation, in a scenario in which the source device performs screen casting to the target device for the first time, if the source device is not set with an unlock password, the target device does not need to display the unlock verification interface in the screen casting window, but indicates the source device to directly perform cross-source screen casting. In this scenario, the target device may directly display "information prompting to wait". After the source device renders an application interface to be cast, the target device controls the screen casting window to display the application interface to be cast.

In a scenario in which the source device performs screen casting to the target device for the first time, if the source device is set with an unlock password, password authentication is also required before the user directly uses the source device. In this case, after determining that the source device has the screen casting condition, the target device may trigger distributed authentication. For descriptions of the distributed authentication, refer to the descriptions. Details are not described herein again.

In addition, it should be noted that, if the source device performs cross-source screen casting to the target device for the first time, and is set with an unlock password, regardless of whether the source device is in the lock screen, the screen-off state, or the unlocked state, the distributed authentication mechanism is triggered when the target device indicates the source device to perform cross-source screen casting.

It should be noted that, that the source device starts screen casting to the target device for the first time may mean that the source device starts cross-source screen casting to the same target device for the first time, or that the source device starts cross-source screen casting for the first time during a use period from the time at which the target device is powered on to the next power off. For the second explanation, specifically, if the target device is powered on for the first time, and the target device is powered off for the first time after the use period, the first power on to the first power off is a first use period. If the target device is powered on for the second time, and the target device is powered off for the second time after the use period, the second power on to the second power off is a second use period. During the first use period, that the source device starts cross-source screen casting to the target device for the first time belongs to starting "for the first time" in the second explanation. During the second use period, that the source device starts cross-source screen casting to the target device for the first time also belongs to starting "for the first time" in the second explanation.

In an implementation, in a scenario in which the source device does not perform screen casting to the target device for the first time, that is, in a scenario in which the source device once started cross-source screen casting to the same target device, or the source device once started cross-source screen casting to the target device during a use period from the time at which the target device is powered on to the next power off.

For the second explanation, specifically, during the first use period, the source device starts cross-source screen casting to the target device for the first time, and when the source device starts cross-source screen casting to the target device for the second time, the target device determines that the source device once started cross-source screen casting to the target device. This also applies to the following third time, fourth time, and the like. During the second use period, the source device starts cross-source screen casting to the target device for the first time. It can be learned from the that, in this case, the target device determines that the source device starts cross-source screen casting to the target device for the first time. The source device starts cross-source screen casting to the target device for the second time. In this case, the target device determines that the source device once started cross-source screen casting to the target device. This also applies to the following third time, fourth time, and the like. If the source device once started cross-source screen casting to the target device, to reduce a quantity of times the user enters the password while ensuring the privacy security of the user, optionally, the target device may first determine whether the time from last successful distributed authentication exceeds a preset duration threshold.

For example, distributed authentication may not be re-performed when the time from the last successful distributed authentication does not exceed the preset duration threshold. It should be noted that, the preset duration threshold may be a default value or a value set by the user. It indicates that the screen casting connection between the source device and the target device still satisfies a need to protect the privacy security of the user during a time period. Therefore, when determining that the time from the last successful distributed authentication does not exceed the preset duration threshold, the target device directly starts screen casting without displaying the unlock verification interface. This can avoid a complex operation caused by repeatedly requiring the user to enter the password, and can improve the convenience of using cross-source screen casting by the user while ensuring the privacy security of the user.

For another example, distributed authentication needs to be re-performed when the time from the last successful distributed authentication exceeds the preset duration threshold. It may be understood that, when determining that the time from the last successful distributed authentication exceeds the preset duration threshold, the target device considers that the screen casting connection between the source device and the target device in this case does not satisfy the need to protect the privacy security of the user. A distributed authentication process in this case is the same as the distributed authentication process in which "the source device starts cross-source screen casting to the target device for the first time". Details are not described herein again.

For example, it is assumed that the source device is set with an unlock password, and that the cross-source screen casting has never been started on the target device before. When the target device determines that the user indicates the source device to perform screen casting, and determines that the source device has the screen casting condition, the distributed authentication mechanism may be triggered. After distributed authentication succeeds, the first time of cross-source screen casting is successfully started. The first time of cross-source screen casting ends at time T1. Assuming that a preset duration threshold set by the user is one hour, at time T2, the target device detects again that the user indicates the same source device to perform cross-source screen casting. The target device determines that the source device once started cross-source screen casting to the target device, and then determines whether a time period between T2 and T1 is greater than one hour. The target device determines that a value of (T2-T1) is less than one hour, and directly starts the second time of cross-source screen casting.

In addition, after the mobile phone completes cross-source screen casting to the PC, as shown in FIG. 8, the mobile phone displays the main interface 101 and the screen casting window 201 on the PC. The screen casting window 201 displays an application interface of a cast application program, for example, the application interface 202 of the social application.

When the mobile phone receives an operation of the user indicating to turn off the screen, or the screen is automatically off when the mobile phone does not receive the user operation for a long time, the display screen of the mobile phone enters a false screen-off state, and the screen casting window 201 of the PC continues to display the application interface 202.

When the mobile phone receives an operation of the user indicating to lock the screen, or the screen is automatically locked when the mobile phone does not receive the user operation for a long time, the mobile phone displays a lock screen interface, and the screen casting window 201 of the PC continues to display the application interface 202.

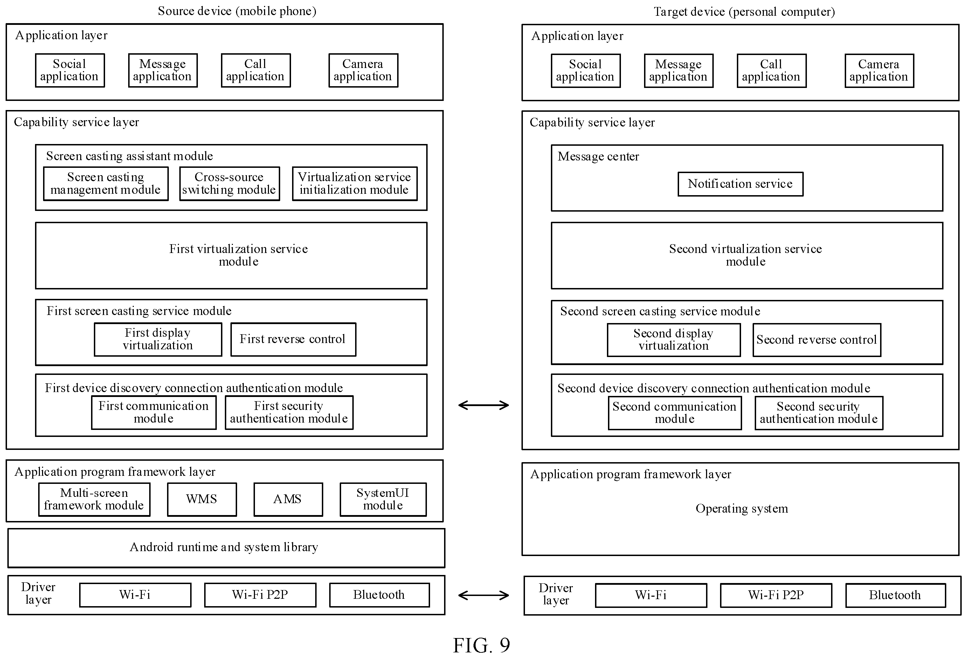

A system structure of an electronic device provided in an embodiment of this application is described below with reference to FIG. 9.

In a hierarchical architecture, software is divided into several layers, and each layer has a clear role and task. The layers communicate with each other through a software interface. It should be noted that, a right half of FIG. 9 is a diagram of a software architecture of a source device, for example, a mobile phone, and a left half of FIG. 9 is a diagram of a software architecture of a target device, for example, a tablet computer (Pad) or a PC.

In some embodiments, as shown in the right half of FIG. 9, a software framework of the source device may include an application program layer, a capability service layer, an application program framework (framework, FWK) layer, an Android runtime (Android runtime), a system library, and a driver layer.

### (1) Application program layer

The application program layer may include a series of application packages, for example, application programs (also referred to as applications) such as a social application, an information application, a call application, and a camera application. For example, the social application includes WeChat, QQ, or the like, and the information application includes a text message, or the like. For ease of description, the application program is referred to as the application for short below. The application on the source device may be a native application (for example, an application installed in the source device at time of installation of an operating system prior to delivery of the source device) or a third party application (for example, an application downloaded and installed by a user through an application store). This is not limited in this embodiment of this application.

### (2) Capability service layer

The capability service layer provides capability support implementing a corresponding service, and as shown in FIG. 9, may include a screen casting assistant module, a first virtualization service module, a first screen casting service module, a first device discovery connection authentication module, and the like.

The screen casting assistant module may be a module configured to interact screen casting-related information with another electronic device (for example, the target device), implements end-to-end logical control, connection management, and the like of screen casting, and is configured to generate a session key (SessionKey) to ensure communication session security between the source device and the target device. The screen casting assistant module may include functional modules such as a screen casting management module, a cross-source switching module, and a virtualization service initialization module. The screen casting management module is configured to manage screen casting-related matters, for example, adding and removing related processing logic settings of Virtual Display. The VirtualDisplay may also be referred to as a virtual display area, a virtual screen, a virtual Display, or the like. The cross-source switching module is configured to control the source device to switch from the cross-source screen casting manner to the same-source screen casting manner. The virtualization service initialization module performs initialization setting on a virtualization service for starting cross-source screen casting.

The first virtualization service module is configured to implement end-to-end logical control of screen casting for audio and video streams, and is responsible for audio and video data streams that are generated by a Speaker, a Mic, a Camera, and the like and transmitted between the source device and the target device.

The first screen casting service module may include a first display virtualization module and a first reverse control module, respectively providing a screen casting capability (that is, screen casting of content from the source device to the target device for display) and a reverse event (that is, an event triggered by the target device to control the source device) control basis capability. The first screen casting service module receives an instruction from the screen casting management module, and provides a corresponding screen casting service based on the instruction, to cast a program running natively to another electronic device (for example, the target device). The first screen casting service module injects inverse control and a text input method to a display (referred to as an external screen below) of the target device, and adds a virtual display flag (for example, Flagl) when creating the virtual display area, so that the external screen displays only content thereof without mirroring content of a display (referred to as a home screen below) of the source device, to implement cross-source screen casting.

The first device discovery connection authentication module is responsible for work such as discovery, connection, and authentication, and is configured to control the driver layer to implement functions of proximity discovery, authentication, connection, and the like between the source device and the target device, and may include a first communication module and a first security authentication module. The first communication module provides a signaling transmission channel between the source device and the target device, and is configured to issue an instruction to establish a communication connection and a screen casting connection between the source device and the target device to the driver layer. At the same time, the first communication module is further configured to start the screen casting assistant module after the transmission path is established. The first security authentication module is configured to perform security authentication, and is responsible for owner identification, starting distributed unlock authentication, obtaining a trust ring, and ensuring the privacy security of the user.

### (3) Application program framework layer (FWK)

The application program framework layer provides an application programming interface (application programming interface, API) and a programming framework for the application programs at the application layer. The application program framework layer includes some predefined functions. As shown in FIG. 9, the application framework layer may include an activity manager service (ActivityManagerService, AMS), a window manager service (WindowManagerService, WMS), a multi-screen framework module, a SystemUI module, and the like.

The AMS is responsible for managing an Activity, and is responsible for work such as starting, switching, and scheduling of components in the system, and managing and scheduling of application programs. For each Activity, there is an application record (ActivityRecord) corresponding to the Activity in the AMS. The ActivityRecord records a status of an Activity of the application. Each activity Activity creates a corresponding ActivityRecord object in the AMS, and the AMS may schedule an Activity process of the application by using the ActivityRecord as an identifier. The ActivityRecord objects are managed in respective task stack, and a plurality of ActivityRecord objects may be added to each task stack. All task stacks are uniformly managed by the ActivityStack, and are responsible for a sequence of the TaskStack, entering a stack, and exiting a stack. Specifically, in the AMS, data classes are defined to respectively store a process (Process), an activity (Activity), and a task (Task). A data class corresponding to the process (Process) may include process file information, memory state information of the process, and an Activity, a Service, and the like included in the process. The Activity information may be stored in the ActivityStack. The ActivityStack is configured to centrally schedule an Activity of the application program. The ActivityStack may specifically store all running Activities (that is, final ArrayList mHistory) information, for example, interface configuration information. For example, a running Activity may be stored in a newArrayList. The ActivityStack may further store historically run Activity information, for example, interface configuration information. It should be noted that, the Activity does not correspond to an application program, and an ActivityThread corresponds to an application program. Therefore, Android allows a plurality of application programs to be simultaneously run, in effect allowing a plurality of ActivityThreads to be simultaneously run. In Android, a basic idea of Activity scheduling is as follows: Each application process reports to the AMS when a new Activity is to be started or a current Activity is stopped. The AMS internally records all application processes. When receiving a start or stop report, the AMS first updates an internal record, and then notifies to run a corresponding client process or stop a specified Activity. Because there is a record of all Activities inside the AMS, the Activities can be scheduled, and an Activity in the background is automatically off based on statuses of the Activity and a system memory.

The WMS carries data and an attribute related to an "interface", and is configured to manage a status related to the "interface", that is, configured to manage a graphical user interface (graphical user interface, GUI) resource used on the screen of the mobile phone, for example, configured to manage a window program and dispatch an event. Managing the window program refers to orderly providing outputs to a physical screen or another display device with an assistance of an application service end and the WMS based on a display request of the application program. Dispatching the event refers to dispatching a user event from a keyboard, a physical button, a touchscreen, a mouse, a trace ball (TraceBoll), or the like to a corresponding control or window. Managing the window program may include obtaining a size of a display screen, determining whether there is a state bar, locking a screen, capturing a screen, and the like, and being responsible for managing a display manner of an application window, including a window display coordinate size, a window display level, and the like, and specifically including creation and destruction of a window, display and hiding of a window, window layout, management of a focus, input method and wallpaper management, and the like. In some embodiments of this application, the WMS may ensure visibility of a screen casting window in a lock screen and a screen-off state of the mobile phone.

It should be noted that, a task stack management function of the AMS is configured to manage a life cycle of the Activity and scheduling between Activities. A life cycle management function of the WMS is configured to manage a life cycle of the window. The two functions cooperate to activate the window through an onResume (onResume) interface, and the activated window is displayed in a foreground; or the window is paused through an onPause (onPause) interface to enable the window to switch from the foreground to a background for display. A top-most window (top Activity) in the task stack is used as an example. The top Activity invokes the onResume for activation. In this case, the top Activity is displayed at the foreground. When a new window is pushed in the task stack, and the new window is located above an original top Activity, the original top Activity invokes the onPause to pause the window to enable the original top Activity to switch from the foreground to the background for display. A similar principle may be used to manage the life cycle for the new window.

The multi-screen framework module is responsible for implementing cross-source screen casting logic, invoking a PendingIntentRecord interface to start an Activity (specified behavior send) corresponding to PendingIntent, and starting an application corresponding to the Activity to a virtual display area by adding a cross-source screen casting flag (for example, Flag2). PendingIntent is a capability provided by Android and used by an external program to invoke the program, the life cycle is not related to a main program, and specified behavior is performed when specific conditions are satisfied or specific events are triggered. The multi-screen framework module is further configured to listen to a sensing event and interact with the screen casting assistant module, for example, invoking an ActivityRecord to listen whether an Activity is at the foreground and visible, notifying the screen casting assistant module of a listening result, invoking a Task to monitor whether the virtual display area is empty, and notifying the screen casting assistant module of a monitoring result. The multi-screen framework module may be configured to perform possessing such as translation, encapsulation, and the like on a raw input event, to obtain enter events including more information, and send the enter events to the WMS, and a clickable area (for example, a control) of each application program, position information of a focus window, and the like are stored in the WMS. Therefore, the WMS may properly distribute the enter events to specified controls or focus windows. The multi-screen framework module may respond to received enter events, and forward the enter events to the WMS, the WMS distributes the input event to a corresponding application, the application sends a registration request to the AMS, and the application is started.

In addition, the multi-screen framework module is further configured to switch an application cast to the external screen back to the home screen when the user clicks a recent task card or a desktop icon. In this case, if the application cast to the external screen uses the cross-source screen casting manner, the cross-source switching module is invoked when the application is switched back to the home screen, and the cross-source screen casting manner is switched to the same-source screen casting manner, otherwise, the application cannot be displayed on the home screen. The multi-screen framework module is further configured to remove a security map layer in the lock screen state of the source device. In some embodiments, the multi-screen framework module may be further configured to modify a power key of the mobile phone in a screen casting scenario.

The SystemUI module is a set of UI components that provide the user with system-level information display and interaction, and is mainly configured to implement status bar information display (for example, icon display of a battery, a Wi-Fi signal, and 3G/4G), a notification panel (for example, a system message and a third party message notification), a recent task bar display panel (for example, displaying a recently used application), and the like. In this embodiment of this application, the SystemUI module is responsible for a notification service, and is configured to stream a message notification of the source device to the target device.

It may be understood that, the application program framework layer may further include a content provider, a view system, a phone manager, a resource manager, a notification manager, and the like (not shown in FIG. 9). For specific meanings thereof, refer to related technical documents. Details are not described herein again.

### (4) Android runtime and system library

The android runtime is responsible for scheduling and management of the system. The android runtime includes a kernel library and a virtual machine. The kernel library includes two parts: a performance function that a programming language (for example, java language) needs to invoke, and a kernel library of the system. The application program layer and the application program framework layer are run in the virtual machine. The virtual machine executes programming files (for example, java files) of the application program layer and the application program framework layer as binary files. The virtual machine is configured to perform functions such as object life cycle management, stack management, thread management, security and exception management, and garbage collection.

The system library may include a plurality of functional modules, for example, a surface manager (Surface Manager), a media library (Media Libraries), a three-dimensional graphics processing library (for example, OpenGL ES), and a two-dimensional graphics engine (for example, SGL). The surface manager is configured to manage a display subsystem, and provide fusion of two dimensional (2-Dimensional, 2D) and three-dimensional (3-Dimensional, 3D) layers to a plurality of application programs. The media library supports playback and recording in a plurality of common used audio and video formats, and also support static image files, and the like. The media library may support a plurality of audio and video encoding formats, for example, MPEG4, H.264, MP3, AAC, AMR, JPG, and PNG. The three-dimensional graphics processing library is configured to implement 3D graphics drawing, image rendering, composition, layer processing, and the like. The 2D graphics engine is a drawing engine for 2D drawing.

### (5) Driver layer

The driver layer is the foundation of an Android operating system, and final functions of the Android operating system are all performed through the driver layer. As shown in FIG. 9, the driver layer includes an underlying driver responsible for work such as discovery, authentication, and connection. For example, the driver layer receives a command issued by a communication module in the application framework layer to perform actions such as connection and disconnection. Specifically, the driver layer includes a Wi-Fi P2P chip, a Bluetooth chip, or the like, and a Wi-Fi P2P transmission channel, a Bluetooth transmission channel, or the like may be established. Certainly, the driver layer may further include a hardware driver, for example, a display screen driver, a camera driver, an audio driver, a sensor driver, a virtual card driver, or the like.

It should be noted that, the schematic diagram of the software structure of the electronic device shown in FIG. 9 provided in this application is only an example, and does not limit specific module division in different layers of the Android operating system. For details, refer to the descriptions of the software structure of the Android operating system in conventional technologies. In addition, the screen casting method and apparatus provided in this application may alternatively be implemented based on another operating system. Examples are not provided one by one in this application.

In some embodiments, as shown in the left half of FIG. 9, a software framework of the target device may include a PC manager, an operating system, and a driver layer. For some of functional modules of the target device and functions of the functional modules, refer to the source device. Details are not described herein again.

Specifically, the PC manager of the target device includes a message center module, a second virtualization service module, a second screen casting service module, and a second device discovery connection authentication module.

The message center module is configured to interact with a message and signaling that are of the source device to receive a message notification streaming from the source device and is responsible for initiating a session instruction (openSession) to the source device. At the same time, the message center module is further configured to: after a session (session) is established, issue an instruction to start a screen casting service.

For functions of the second virtualization service module, the second screen casting service module, the second device discovery connection authentication module, respectively refer to the first virtualization service module, the first screen casting service module, the first device discovery connection authentication module in the source device. A difference lies in that, the second screen casting service module is configured to receive and parse a video stream and related information sent by another device, to natively display an application running on another device.

The operating system of the target device may be a Windows OS (for example, a personal computer) or an Android OS (for example, the tablet computer).

For a driver layer of the target device, refer to that of the source device.

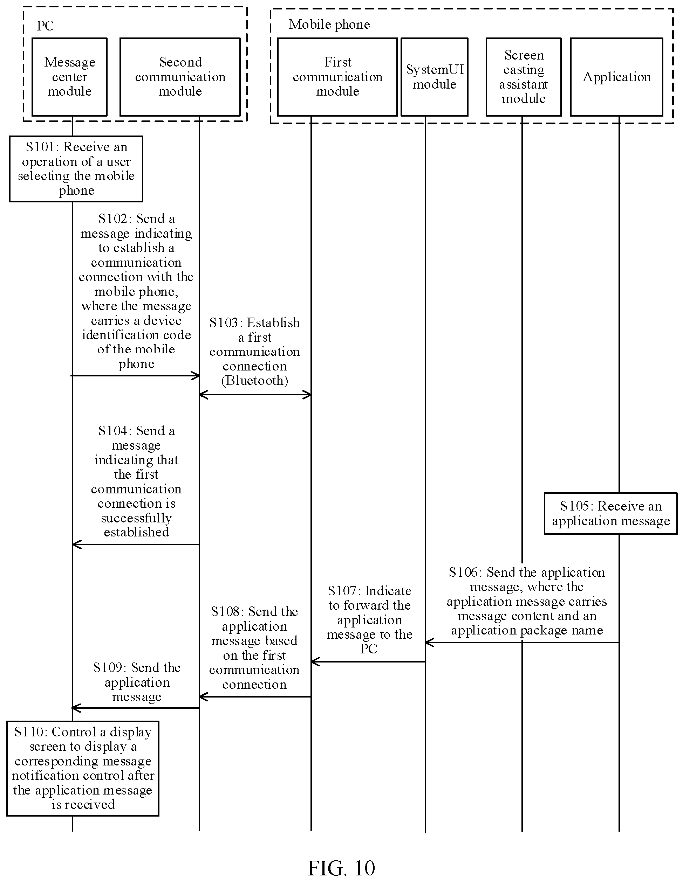

Based on the system structure of the electronic device shown in FIG. 9, an example in which the mobile phone is a source device (for example, referred to as a first device) and the PC is a target device (for example, referred to as a second device) is used, and the process in which the mobile phone performs screen casting to the PC when in the screen-on state and the unlocked state is described with reference to FIG. 10 to FIG. 12.

For example, a mobile phone end includes the first communication module, the screen casting assistant module, the first virtualization service module, the first screen casting service module, the first security authentication module, the FWK (including the SystemUI module), and the application. A PC end includes the message center module, the second screen casting module, the second communication module, and the second security authentication module. It should be noted that, other functional modules shown in FIG. 9 are also involved in a specific implementation process of the screen casting method provided in this embodiment of this application, and are not shown in the sequence diagram.

As shown in FIG. 10, the screen casting method may include the following steps.

S101: The message center module of the PC receives an operation of the user selecting the mobile phone.

It may be understood that, S101 is merely an example in which the PC establishes the first communication connection with the mobile phone, the PC detects devices located at a same local area network as the PC, and displays all connectable devices for the user to select, and the user selects the mobile phone on the PC, to start a subsequent connection behavior. There may alternatively be another manner to enable the PC and the mobile phone to start to establish the first communication connection, for example, the mobile phone detects devices located at a same local area network as the mobile phone, and displays all connectable devices for the user to select, and the user selects the PC on the mobile phone, to start a subsequent connection behavior. In another example, the mobile phone and the PC may establish a near field connection through a "one-touch" function, an NFC function, or the like. This is not limited herein.

S102: The message center module sends a message indicating to establish a communication connection with the mobile phone to the second communication module, where the message carries a device identification code of the mobile phone.

The user selects the mobile phone as a collaborative notification device from nearby available collaborative notification devices found through searching by the PC. After receiving a selection operation entered by the user, the message center module of the PC may send an inter-process communication (inter-process communication, IPC) message to the second communication module. Optionally, the IPC message may carry a device name, a device identification code, a MAC address, or the like of the mobile phone, configured to indicate the second communication module to establish the communication connection with the mobile phone.

S103: The second communication module establishes the first communication connection with the first communication module of the mobile phone.

For example, the first communication connection may be a Bluetooth connection (BR connection) for implementing cooperative notification between the PC and the mobile phone, that is, a message on the mobile phone may be streamed to the PC through the Bluetooth channel.

S104: The second communication module returns a message indicating that the first communication connection is successfully established to the message center module.

S105: The application in the mobile phone receives an application message.

After the PC and the mobile phone establish the first communication connection, the mobile phone receives the application message pushed by the application installed on the mobile phone. The application message may have different representation forms in the application, the SystemUI module on the mobile phone, and the message center module on the PC, which are collectively referred to as the application message herein.

S106: The application sends the application message to the SystemUI module, where the application message carries message content and an application package name.

S107: The SystemUI module indicates the first communication module to forward the application message to the PC.

For example, in this embodiment of this application, after the PC establishes the first communication connection with the mobile phone, the SystemUI module streams all messages received by the mobile phone to the PC based on the first communication connection, or the message may be selectively streamed, for example, a message with a particular flag may be streamed to the PC, or a message from a particular application may be streamed to the PC, or a message with high importance may be streamed to the PC. This is not limited herein.

S108: The first communication module sends the application message to the second communication module based on the first communication connection, where the application message carries the message content and the application package name.

S109: The second communication module sends the application message to the message center module, where the application message carries the message content and the application package name.

S110: The message center module receives the application message, and controls the display screen to display a corresponding message notification control.

After the PC establishes the first communication connection with the mobile phone, the application message received on the mobile phone is streamed to the PC. It may be understood that, neither the mobile phone is in the unlocked and the screen-on state nor in the lock screen state or the screen-off state in this case affects streaming of a message notification between the PC and the mobile phone. After receiving the application message, the PC displays a message notification control associated with the application message.

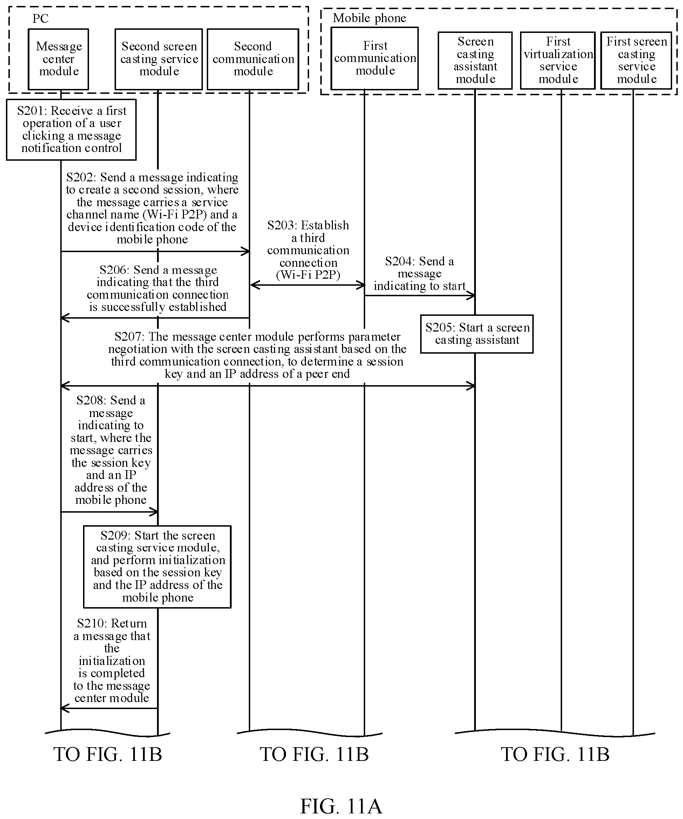

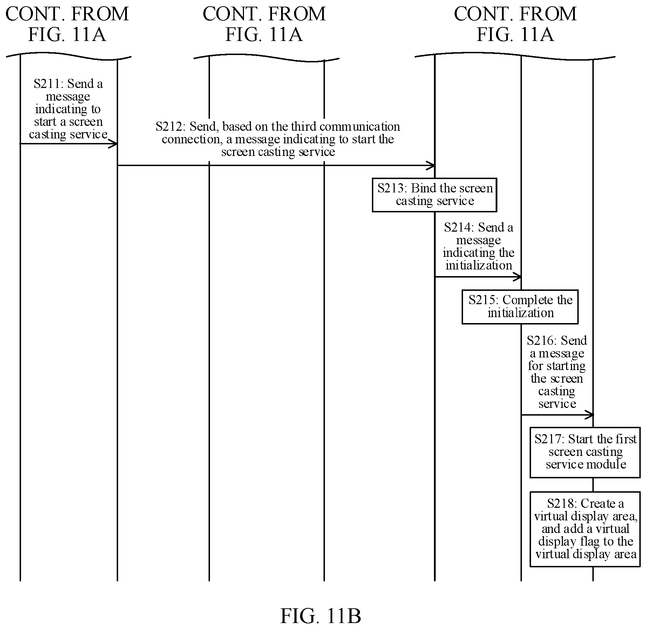

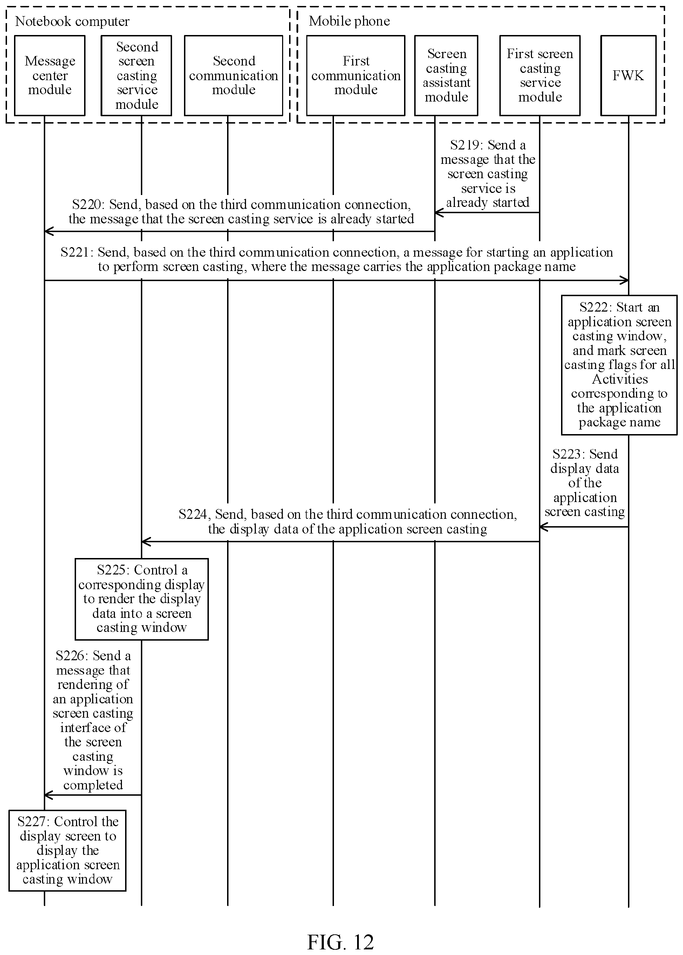

In some embodiments, the target device receives a user operation on the message notification control, the target device establishes a third communication connection with the source device, the target device sends a request for starting a cross-source screen casting to the source device, and the source device displays the application screen casting window on the target device in response to the request. In other words, as shown in FIG. 11 and FIG. 12, the method may further include the following steps.

S201: The message center module receives a first operation of the user clicking the message notification control.

The message notification control may be referred to as a first control. The first control displays an application message of a first application, for example, the application message is referred to as a first message.

S202: The message center module sends a message indicating to create a second session to the second communication module, where the message carries a service channel name (Wi-Fi P2P channel) and the device identification code of the mobile phone.

For example, the service channel name may be the Wi-Fi P2P channel, the device identification code may be the identification code of the mobile phone, and the indication to create the second session is configured to indicate the second communication module to establish the Wi-Fi P2P channel between the PC and the mobile phone corresponding to the device identification code.

S203: The second communication module establishes the third communication connection with the first communication module.

For example, the third communication connection may be the Wi-Fi P2P connection, providing a data transmission channel for a screen casting service.

It should be noted that, types of the first communication connection, the second communication connection, and the third communication connection established between the PC and the mobile phone are not limited to the Bluetooth connection and the Wi-Fi P2P connection, and may also be other types of connection manners, as long as a requirement for data transmission between the two can be satisfied.

S204: The first communication module sends a message indicating to start to the screen casting assistant module.

S205: Start the screen casting assistant module.

The first communication module is further responsible for interaction with the screen casting assistant, the screen casting assistant module is in an off state when the mobile phone has no screen casting need, and the first communication module triggers, when there is a screen casting need, the screen casting assistant module to be started.

S206: The second communication module returns a message indicating that the third communication connection is successfully established to the message center module.

S207: The message center module performs parameter negotiation with the screen casting assistant based on the third communication connection, to determine a session key and an IP address of a peer end.

The parameter negotiation includes negotiating a SessionKey on a service side and obtaining an IP address of a peer-end device. The SessionKey, also referred to as a data encryption key or a working key, is a randomly generated encryption and decryption key that ensures a secure communication session between a user and another computer or two computers, and may be obtained through negotiation between communication users. The SessionKey is usually generated dynamically and only when encryption of session data is needed.

S208: The message center module sends a message indicating to start to the second screen casting service module, where the message carries the session key and an IP address of the mobile phone.

S209: Start the second screen casting service module, and perform initialization based on the session key and the IP address of the mobile phone.

S210: The second screen casting service module returns a message indicating that the initialization is completed to the message center module.

It can be learned from the that, the screen casting service module provides a screen casting capability and a reverse event control basis capability. After the screen casting service on the PC end is successfully initialized, capability support is provided for receiving and parsing related information sent by the mobile phone end, to display, on the PC end, an application run on the mobile phone end. In addition, the reverse event control basis capability provides support for implementing cross-source screen casting. Therefore, the screen casting service module needs to be initialized before performing a cross-source screen casting service, to ensure that the screen casting capability and the reverse event control basis capability are normally provided.

S211: The message center module sends a message indicating to start the screen casting service to the second screen casting service module.

S212: The second screen casting service module sends, based on the third communication connection, a message for starting the screen casting service to the screen casting assistant module.

It should be noted that, step S207 includes that the second screen casting service module sends a message to the second communication module, the second communication module transmits the message to the first communication module through the third communication connection, and the first communication module sends the message to the screen casting assistant module. For ease of description, the following "based on the third communication connection" each includes a data transmission process between the first communication module and the second communication module. Details are not described below. In addition, the message for starting the screen casting service may also be referred to as a first request. When the user selects the first control displaying the first message, the first request may carry a first identifier.

S213: The screen casting assistant module binds the screen casting service.

It may be understood that, a screen casting management module in the screen casting assistant module binds a related screen casting service to manage screen casting transaction.

S214: The screen casting assistant module sends a message indicating to perform initialization to the first virtualization service module.

It may be understood that, the virtualization service initialization module in the screen casting assistant module is configured to indicate the virtualization service module to perform initialization.

S215: The first virtualization service module completes the initialization.

The first virtualization service module is responsible for audio/video virtualization in the screen casting service, and the first virtualization service module on the mobile phone end interacts with the second virtualization service module on the PC end, so that in a screen casting process, a mobile phone application screen cast to the PC can use a Speaker, a Mic, a Camera of the PC, and a generated audio and video data stream is transmitted between the mobile phone and the PC, to implement functions such as answering or making an audio/video call during screen casting.

S216: The first virtualization service module sends a message indicating to start the screen casting service to the first screen casting service module.

S217: Start the first screen casting service module.

S218: The first screen casting service module creates a virtual display, and adds a virtual display flag to the virtual display.

It should be noted that, the screen casting service module is an important functional module for implementing a cross-source screen casting manner. In a specific implementation, Flag1: VIRTUAL_DISPLAY_FLAG_OWN_CONTENT_ONLY (a virtual display flag, which may also be referred to as a second flag) is added when the first screen casting service module on the mobile phone end creates the virtual display area, so that a screen casting window on the PC only displays content of the screen casting window, and does not mirror content displayed on the display screen of the mobile phone, thereby ensuring that display content of the mobile phone does not affect display content of the screen casting window of the PC.

In this way, during a process of using the mobile phone, the mobile phone displays another application interface or desktop, which does not affect display of the screen casting window of the PC, and the screen casting window of the PC can maintain content of the mobile phone, and is not synchronized with the displayed content of the mobile phone. At the same time, the reverse event control basis capability provided by the screen casting service module can implement reverse control on the mobile phone end on a computer end. Certainly, the implementation of the cross-source screen casting manner further requires the second screen casting service module on the PC end to interact with the first screen casting service module on the mobile phone end.

S219: The first screen casting service module sends a message indicating that the screen casting service is already started to the screen casting assistant module.

S220: The first screen casting assistant sends, based on the third communication connection, the message indicating that the screen casting service is already started to the message center module.

S221: The message center module sends, based on the third communication connection, a message for starting an application to perform screen casting to the FWK, where the message carries the application package name.

The carried application package name is a package name of an application program (for example, the social application) corresponding to the message notification control (for example, the message card 104) selected by the user in S201. It may be understood that, as shown in FIG. 1, the message card 104 is configured to display the application message from the social application of the mobile phone, and it may be considered that the message card 104 corresponds to the social application of the mobile phone. A correspondence between another message notification control and the application program is similar.

S222: The FWK starts the application screen casting window, and marks all Activities corresponding to the application package name with a screen casting flag.

In some embodiments, for a process in which the FWK starts an application screen casting window, refer to the related technologies, an application program corresponding to an application package name may be started, and an application interface of the application program is drawn in the virtual display area (first display area), to generate display data. Details are not described herein again. Different from the related technologies, in a process of starting the application screen casting window, the FWK may mark all Activities corresponding to the application package name (that is, the application package name carried in the message for starting the application to perform screen casting) with a screen casting flag (first flag). All Activities corresponding to the application package name may be all Activities corresponding to the application program indicated by the application package name. For example, as shown in FIG. 1 and FIG. 2, because the user selects the message card 104 on the PC, the message sent by the PC to the mobile phone for starting the application to perform screen casting carries the application package name of the social application. In this way, when performing S222, the mobile phone needs to mark all Activities of the social application with the screen casting flag. In this way, through the screen casting flag, it is represented that the application indicated by the application package name is performing cross-source screen casting.

S223: The FWK sends display data cast by the application to the first screen casting service module.

S224: The first screen casting service module sends, based on the third communication connection, the display data cast by the application to the second screen casting service module.

S225: The second screen casting service module controls the display screen to render the display data to the screen casting window.

The screen casting window may also be referred to as a first window, and the display data rendered to the first window may be image information. For example, when the mobile phone performs screen casting to the first application, the display data rendered in the first window may be first image information corresponding to the first application. In subsequent embodiments, an example in which the first application performs screen casting is used for description.

S226: The second screen casting service module sends a message indicating that rendering of the application screen casting interface of the screen casting window is completed to the message center.

S227: The message center module controls the display screen to display the application screen casting window.

In this case, the PC displays the application screen casting window corresponding to the application message, that is, the mobile phone successfully performs screen casting to the PC when in the screen-on state and the unlocked state.

For example, as shown in FIG. 1 and FIG. 2, when the PC receives an operation of the user clicking the message card 104, the PC displays the screen casting window 201 corresponding to the social application, to display an application interface 202 corresponding to the application message. The application screen casting window may be the screen casting window 201 configured to display the application interface 202.

After the mobile phone successfully performs screen casting to the PC, that is, after S227, the mobile phone may enter the screen-off state or the lock screen state. For example, the user indicates, through the lock screen key of the mobile phone, the mobile phone to enter the screen-off state or the lock screen state. For another example, the mobile phone automatically enters the screen-off state or the lock screen state if not receiving the user operation for a long time.

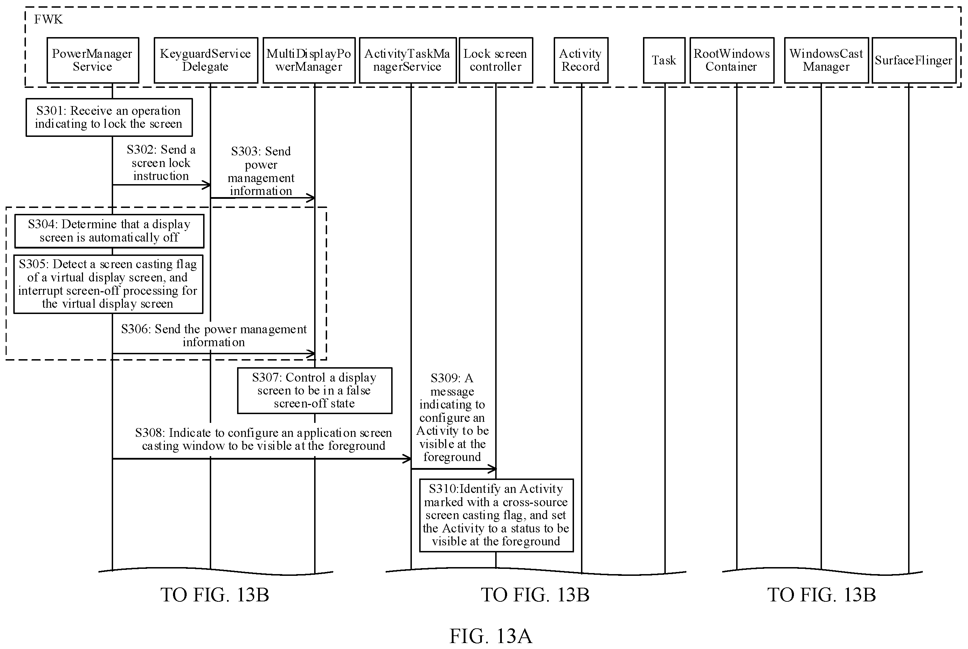

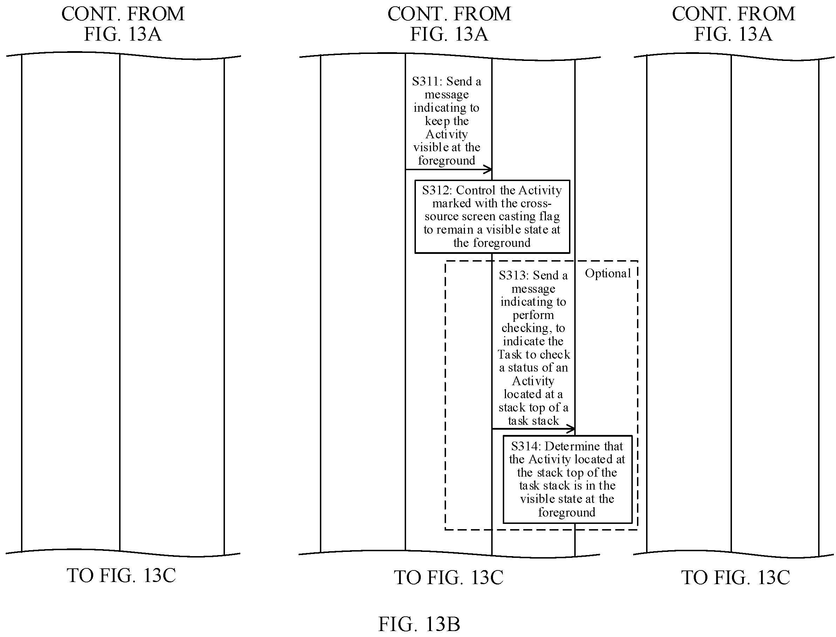

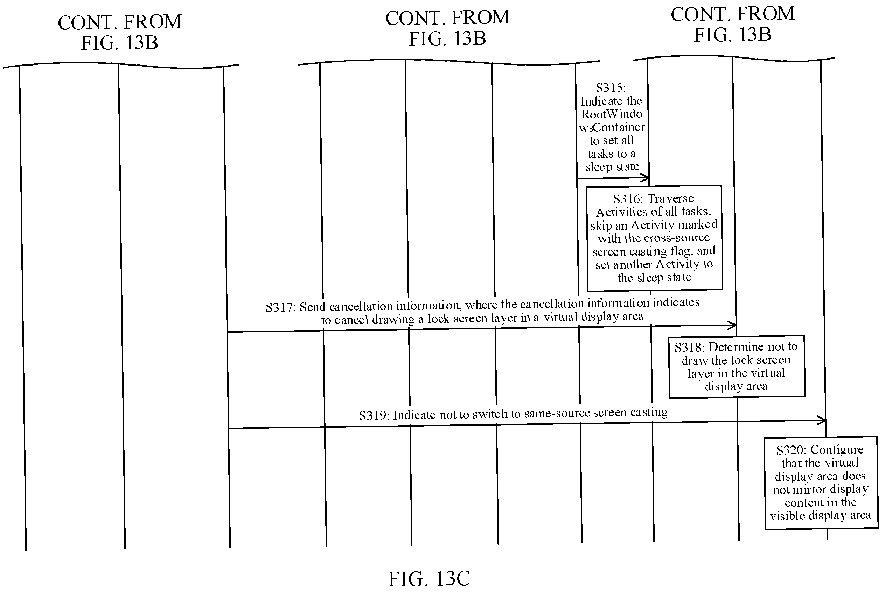

The following describes, with reference to FIG. 13, a process in which functional modules inside the mobile phone interact with each other when the mobile phone enters from the screen-on state and the unlocked state to the screen-off state or the lock screen state during a screen casting process.

For example, the mobile phone may further include a PowerManagerService, a KeyguardServiceDelegate (lock screen management service), a MultiDisplayPowerManager (multi-screen frame module), an ActivityTaskManagerService (active stack management service), a KeyguardController (lock screen controller), an ActivityRecord (active recorder), a Task (task stack), a RootWindowsContainer (root window container), a WindowsCastManager (window appearance manager), and a SurfaceFlinger (surface flinger).

As shown in FIG. 13, the method may include the following steps.

S301: The PowerManagerService receives an operation indicating to lock the screen.

The PowerManagerService is responsible for power supply management of a mobile phone system, and common functions include lighting up the screen, turning off the screen, entering the screen saver, and the like. The PowerManagerService is inherited from a SystemService, started by the SystemServer, registered in a system service, and interacts with other components through a Binder.

In some embodiments, after receiving a press operation of the user through the lock screen key (that is, a Power key) of the mobile phone, the PowerManagerService may determine that the operation indicating to lock the screen is received.

S302: The PowerManagerService sends a screen lock instruction to the KeyguardServiceDelegate.

In some embodiments, the KeyguardServiceDelegate is a class configured to represent a KeyguardService. The PowerManagerService sends the screen lock instruction to the KeyguardServiceDelegate, to indicate to start a lock screen loading process.

S303: The KeyguardServiceDelegate sends power management information to the MultiDisplayPowerManager.

In some embodiments, when the KeyguardServiceDelegate determines that the screen casting service between the mobile phone and the PC is being performed, the KeyguardServiceDelegate indicates, through power management information, the MultiDisplayPowerManager to replace the PowerManagerService to manage a power supply of the mobile phone system.

Certainly, in addition to receiving the operation of the user indicating to lock the screen, when the screen of the mobile phone is automatically off or when the mobile phone receives the operation of the user indicating to turn off the screen, the mobile phone may also trigger to indicate the MultiDisplayPowerManager to replace the PowerManagerService to manage the power supply of the mobile phone system. In other words, in some possible scenarios, the method may not include S301 and S302, but includes the following S304 to S306.

S304: The PowerManagerService determines that the display screen is automatically off.

In some embodiments, for a process of determining that the display screen is automatically off, refer to the related technologies. Details are not described herein again.

S305: The PowerManagerService detects the screen casting flag of the virtual display screen, and interrupts screen-off processing for the virtual display screen.

In some embodiments, that the PowerManagerService detects the screen casting flag of the virtual display screen indicates that the current mobile phone is performing screen casting to another device, and screen casting is being performed. In this scenario, to avoid the impact of automatic-screen-off on screen casting, the PowerManagerService may interrupt the screen-off processing for the virtual display screen.

S306: The PowerManagerService sends the power management information to the MultiDisplayPowerManager.

In some embodiments, the power management information is sent to indicate the MultiDisplayPowerManagerto replace the PowerManagerService to manage the power supply of the mobile phone system.

It may be understood that, the S301 to S303 and the S304 to S306 describe two different scenarios in which sending of the power management information to the MultiDisplayPowerManager is triggered. In a scenario in which the mobile phone enters the lock screen state, S301 to S303 are performed, and in a scenario in which the mobile phone enters the screen-off state, S304 to S306 are performed. S301 to S303 are not associated with S304 to S306.

S307: The MultiDisplayPowerManager controls the display screen to enter a false screen-off state.

It should be noted herein that, the false screen-off state, the screen-off state, and the screen-on state are state types of the display screen. Compared with the screen-off state, in the screen-on state, not only a power-on state and a power-off state of an LCD of the display screens are different (for example, in the screen-on state, the LCD is in the power-on state, and in the screen-off state, the LCD is in the power-off state), but also configuration parameters corresponding to internal related functional services (for example, an AOD service and a POWER service) are different. Compared with the screen-on state, in the false screen-off state, only the power-on state and the power-off state of the LCD of the display screens are different (for example, in the screen-on state, the LCD is in the power-on state, and in the false screen-off state, the LCD is in the power-off state), but the configuration parameters corresponding to the internal related functional services (for example, the AOD service and the POWER service) are the same. Compared with the screen-off state, in the false screen-off state, the power-on state and the power-off state of the LCD of the display screens are the same, but the configuration parameters corresponding to the internal related functional services (for example, the AOD service and the POWER service) are also different.

Generally, the screen-off state and the screen-on state are managed by the PowerManagerService. In this embodiment of this application, after the MultiDisplayPowerManager replaces the PowerManagerService for power management, the MultiDisplayPowerManager may control the display screen to enter the false screen-off state.

In some embodiments, the MultiDisplayPowerManager may switch the display screen of the mobile phone from the screen-on state to the false screen-off state in response to the power management information. In a switching process, the MultiDisplayPowerManager only needs to control, through a TP service, to power off the LCD, without changing a status and configuration of a related service.

After the PowerManagerService indicates the MultiDisplayPowerManager to replace for power management, and the MultiDisplayPowerManager also completes controlling the display screen to switch from the screen-on state to the false screen-off state, the method may further include the following steps.

S308: The PowerManagerService indicates the ActivityTaskManagerService to configure the application screen casting window to be visible at the foreground.

S309: The ActivityTaskManagerService sends a message indicating to set the Activity with the screen casting flag to an OnResume state to the KeyguardController.

It should be noted that, the ActivityTaskSupervisor invokes the KeyguardController to monitor whether the Activity is in the OnResume state. If the Activity is in the OnResume state, it indicates that the application screen casting window corresponding to the Activity is visible to the user and may interact (OnResume state) with the user after being started to the PC. If the Activity is in an OnPause state (OnPause state), it indicates that the application screen casting window corresponding to the Activity is in the background after being started to the PC, and the user cannot perform an operation. The OnResume state and the OnPause state are two states in the life cycle of the Activity. When the Activity is in the OnResume state, the Activity is in an activated state in which the Activity is visible and can interact with the user, and the user may obtain a focus of the Activity. When the Activity is in the OnPause state, the Activity is covered by another transparent Activity or Dialog-styled Activity, the Activity remains being connected to the window manager in this case, the system continues to maintain an internal state thereof, and the Activity is still visible, but the Activity already loses the focus, and therefore cannot interact with the user. When the mobile phone is in the lock screen state or the screen-off state, in a process of starting the Activity, the AMS component switches the life cycle of the Activity to the onPause state, causing the Activity to fail to interact with the user. Consequently, the screen casting is abnormal.

S310: The KeyguardController identifies an Activity with the screen casting flag, and sets the Activity to the OnResume state.

The KeyguardController is a lock screen controller that identifies the Activity with the screen casting flag and returns "true", to indicate to set the Activity to the OnResume state. This ensures that the application screen casting window corresponding to the Activity with the screen casting flag is visible on the target device when the source device is in the lock screen state.

S311: The KeyguardController sends a message indicating to keep the Activity with the screen casting flag in the OnResume state to the ActivityRecord.

S312: The ActivityRecord controls the Activity with the screen casting flag to remain in the OnResume state.

S313: The ActivityRecord sends a message indicating to perform checking to the Task, to indicate the Task to check a status of an Activity located at a stack top of a task stack.

S314: The Task determines that the Activity located at the stack top of the task stack is in the OnResume state.

It should be noted that, one application may correspond to one or more Activities, and the one or more Activities may be stored in one or more task stacks. The task stack follows a last-in-first-out rule, and the Activity located at the task top of the task stack is executed first. To ensure that the application screen casting window corresponding to the to-be-executed Activity is visible at the foreground, it needs to be ensured that the Activity located at the stack top is in the OnResume state.

It may be understood that, step S313 and step S314 are equivalent to a fault tolerance mechanism that checks whether the Activity located at the stack top of the task stack is in the OnResume state, and that the two steps are optional, that is, in some other embodiments, S313 and S314 may alternatively be excluded.

S315: The Task indicates the RootWindowsContainer to control all tasks to enter a sleep state.

S316: The RootWindowsContainer traverses Activities of all tasks, skips an Activity with the screen casting flag, and controls another Activity to enter the sleep state.

It should be noted that, except for the Activity with the screen casting flag skipping a sleep process, the another activity is placed in the sleep state. Therefore, the RootWindowsContainer needs to traverse the Activities corresponding to all the tasks, obtains the Activity with the screen casting flag through filtering, and returns "false", to indicate the Activity not to enter a sleep mode. The another Activity returns "true", to enter a sleep process.

For example, a cross-source screen casting flag is added to both of an Activity l and an Activity 2 in a same task stack, and the RootWindowsContainer enables the Activity l and the Activity 2 to skip the sleep process; and an Activity 3 and an Activity 4 to which no cross-source screen casting flag is added are placed in the sleep state.

When the Activity l is located at the stack top of the task stack, the Task checks a status of the Activity l, to ensure that the Activity l is in the OnResume state, so that the Activity l is visible to the user on the PC and can be operated by the user at the foreground after cross-source screen casting is performed on the Activity l.

After the Activity l is executed, the Activity 2 that does not enter a sleep mode advances to the stack top of the task stack, and the Task checks a status of the Activity 2, to ensure that the Activity 2 is in the OnResume state, so that the Activity 2 is visible to the user on the PC and can be operated by the user at the foreground after cross-source screen casting is performed on the Activity 2. An execution process of another Activity to which the cross-source screen casting flag is added is implemented by analogy. Details are not described herein again. However, an Activity to which the cross-source screen casting flag is not added is placed in the sleep state by the RootWindowsContainer and is not started to an outer screen for display.

Through the steps, the application screen casting window on the PC is not affected by the status of the mobile phone, and foreground visibility and operability can still be maintained. Then, still as shown in FIG. 13, the method may further include the following steps.

S317: The MultiDisplayPowerManager sends cancellation information to the WindowsCastManager, where the cancellation information indicates to cancel drawing the lock screen layer in the virtual display area.

S318: The WindowsCastManager determines not to draw the lock screen layer in the virtual display area.

S319: The MultiDisplayPowerManager indicates the SurfaceFlinger not to switch to the same-source screen casting.

S320: The SurfaceFlinger configures that the virtual display area does not mirror the display content in the visible display area.

A role of the SurfaceFlinger is to receive graphical display data from a plurality of sources, composite the data, and then send the data to a display device. For example, an application is opened. Commonly, there are three layers of display: a statusbar at the top, a navigation bar at the bottom or a side, and an interface of the application, each layer being individually updated and rendered. These interfaces are composited by the SurfaceFlinger as one piece of application layer display data refreshed to hardware for display.

In this embodiment of this application, the SurfaceFlinger determines that the virtual display area is with the virtual display flag, obtains only a layer in the virtual display area when the application layer is composited, and obtains no layer in another display area for composition with the layer. In this way, the cross-source screen casting manner can be implemented, that is, the composited application layer is related to only the layer in the virtual display area. Referring back to FIG. 2, the SurfaceFlinger does not obtain a layer in the visible display area. Therefore, an interface displayed in the screen casting window of the PC is not affected even if the visible display area includes a lock screen interface or another application interface. Because the SurfaceFlinger obtains only the layer in the virtual display area, and transfers the layer to the screen casting window of the PC for display in a specific manner,

after the SurfaceFlinger completes composition of the display data, the SurfaceFlinger may send the display data through the first screen casting service module, to indicate the PC to display the corresponding application screen casting window. For details, refer to S223 to S227. In addition, in the screen-on state of the mobile phone, the application interface of the first application may draw the virtual display area, and then the SurfaceFlinger composes corresponding display data, which is, for example, referred to as first image information. After the mobile phone is switched to the lock screen state or the screen-off state, because processing of the steps is performed, the application interface of the first application may still draw the virtual display area, and the SurfaceFlinger composes corresponding display data, which is, for example, referred to as second image information. Because the first image information and the second image information both correspond to the application interface of the first application, in some scenarios, display content corresponding to the first image information and the second image information may be the same.

It may be understood that, the application layer may include an application interface corresponding to a currently executed Activity. The display data may include information such as different display objects at the application layer, and display positions, sizes, and the like of the display objects in the virtual display screen.

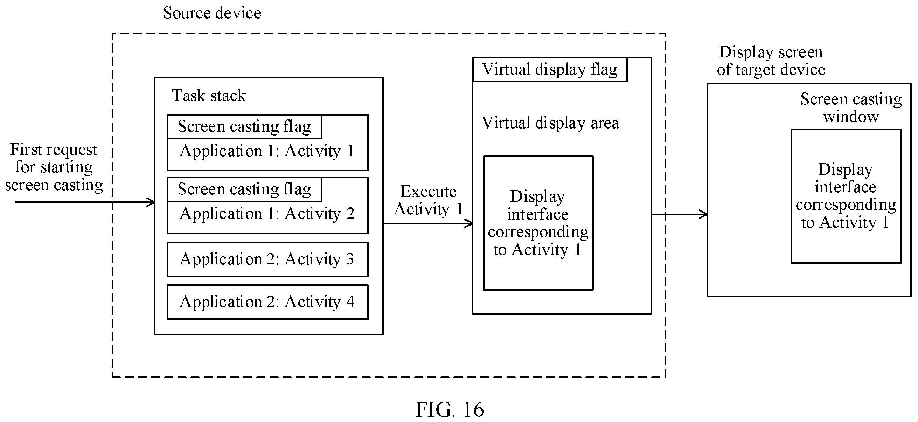

It should be noted that, the virtual display area is the virtual display area flagged with the flag Flagl and created in step S218. Content in the virtual display area is invisible to the user, and the mobile phone may use the virtual display area as a canvas that occupies specific storage space. For example, referring to FIG. 16, FIG. 16 is a process diagram of starting a first application screen casting window. When an application package name carried by a first request for starting screen casting corresponds to an application 1, PendingIntentRecord mas all Activities of the application 1 with a screen casting flag, as shown in a task stack (created by Task) in FIG. 16. When the Activity l of the application 1 is executed (where the Activity l corresponds to the first message), as shown in FIG. 16, the mobile phone draws a first application interface corresponding to the Activity I in the virtual display area, and then SurfaceFlinger determines that the virtual display area carries the virtual display flag, obtains only a first application interface layer in the virtual display area, generates corresponding first display data, and sends the corresponding first display data to the target device.

After receiving the first display data, the target device draws and renders an application screen casting interface corresponding to the first message of the first application based on the first display data for display on the screen casting window of the target device. For details, refer to steps S225 to S227 in FIG. 12 and FIG. 7. In this case, the screen casting window of the target device displays the application screen casting interface corresponding to the first display data.

When the Activity 2 of the application 1 is executed (where the Activity 2 is pushed to the stack top of the task stack), the mobile phone draws a second application interface corresponding to the Activity 2 in the virtual display area, and then the SurfaceFlinger determines that the virtual display area carries the virtual display flag, obtains only a second application interface layer in the virtual display area, generates corresponding second display data, and sends the second display data to the target device. Subsequently, the screen casting window of the target device displays an application screen casting interface corresponding to the second display data, that is, the application screen casting interface corresponding to the first display data is switched to the application screen casting interface corresponding to the second display data, to complete switching between different application interfaces of the application 1 in the screen casting window.

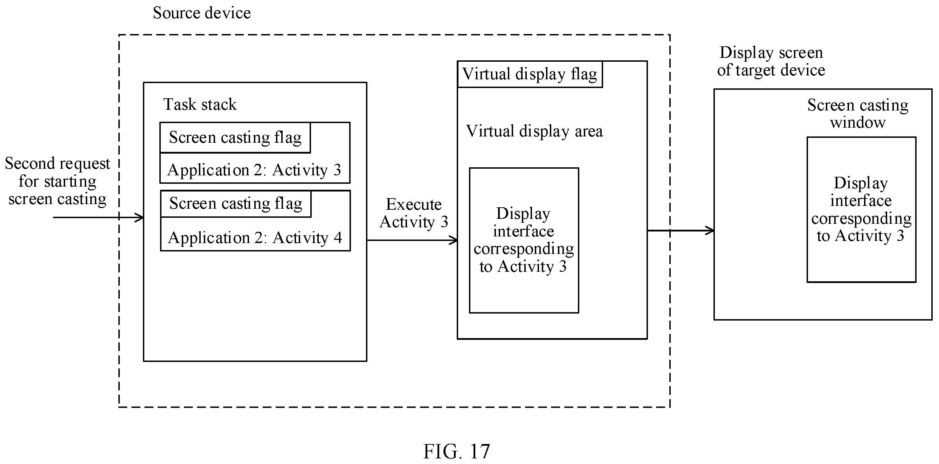

For example, in some embodiments of this application, referring to FIG. 17, FIG. 17 is a process diagram of starting a second application screen casting window. In the screen casting method provided in this embodiment of this application, the source device further receives a second message (also referred to as second data) from the second application when the screen casting window of the target device displays the application screen casting interface corresponding to the first application (for example, the screen casting window of the target device displays the application screen casting interface corresponding to the second display data). After the second message is streamed to the target device, the target device displays a message notification control corresponding to the second message. After receiving an operation of the source device clicking the message notification control, the target device sends a second request for starting screen casting to the source device. In the lock screen state or the screen-off state of the source device, the first screen casting service module receives the second request, creates a second virtual display area (VirtualDispaly2), and adds the virtual display flag. When the Activity 3 of the application 2 is executed (where the Activity 3 corresponds to the second message), as shown in FIG. 17, the mobile phone draws a third application interface corresponding to the Activity 3 in the virtual display area, and then the SurfaceFlinger determines that the virtual display area carries the virtual display flag, obtains only a third application interface layer in the virtual display area, generates corresponding third display data, and sends the corresponding third display data to the target device.

After receiving the third display data, the target device draws and renders an application screen casting interface corresponding to the second message of the second application based on the third display data for display on the screen casting window of the target device. For example, the application screen casting interface corresponding to the second display data is displayed on the screen casting window of the target device, and is switched to the application screen casting interface corresponding to the third display data, to complete switching between application interfaces of different applications (for example, the first application and the second application) in the screen casting window.

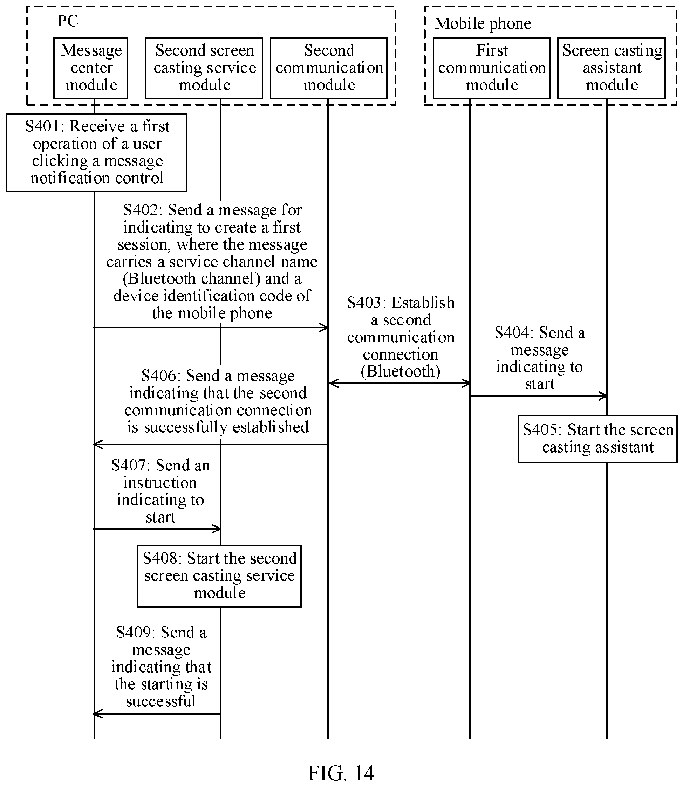

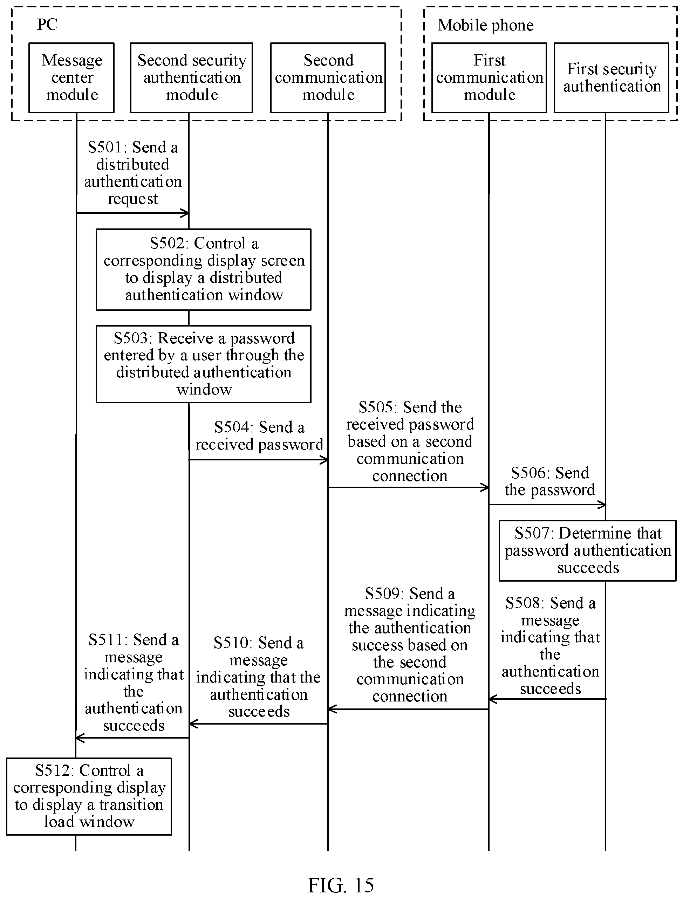

Specific implementations of the embodiments when the source device enables the security authentication function in some other embodiments are described below with reference to FIG. 14 and FIG. 15.

In some other embodiments, optionally, the source device may enable the security authentication function, to ensure the privacy of the source device in the lock screen state or the screen-off state. Before the application interface 202 is displayed in the screen casting window 201, a security authentication interface may further be displayed, and a transition loading interface may further be displayed. In this case, in step S201, that is, after the message center module receives the first operation of the user clicking the message notification control, the security authentication mechanism is triggered first. For a specific implementation process, refer to FIG. 14, FIG. 15, and the following descriptions.

As shown in FIG. 14, the method may further include the following steps.

S401: When the mobile phone is in the lock screen state or the screen-off state, the message center module receives the second operation of the user clicking the message notification control.

It should be noted that, the second operation herein and the first operation in step S201 in FIG. 11 are both operations of the user clicking the message notification control. In this embodiment, because the security authentication mechanism is added, before establishment of the third communication connection in FIG. 11 is triggered, steps shown in FIG. 14 and FIG. 15 are added.

It may be understood that, the user does not perform security authentication when the mobile phone is in the lock screen state or the screen-off state. In this case, the privacy security of the user is not guaranteed if the PC is allowed to directly start screen casting without the security authentication. Therefore, in some embodiments, the security authentication mechanism may be triggered before the PC end starts screen casting, to ensure the privacy security of the user.

In this embodiment of this application, because the screen casting is directly started on the PC end, the security authentication mechanism is triggered on the PC end. However, password authentication is distributed on the mobile phone end. Therefore, the second security authentication module on the PC end needs to send authentication information (password) received on the PC end to the first security authentication module on the mobile phone end for password authentication, and the mobile phone end returns an authentication result to the PC end. Therefore, to perform security authentication on signaling transmission between the mobile phone and the PC, a transmission channel needs to be established first.

S402: The message center module sends a message indicating to create a first session to the second communication module, where the message carries a service channel name (Bluetooth channel) and a device identification code of the mobile phone.

For example, the service channel name may be the Bluetooth channel, the device identification code may be an identification code of the mobile phone, and the indication to create the first session is configured to indicate the second communication module to establish the Bluetooth channel between the PC and the mobile phone corresponding to the device identification code.

S403: The second communication module establishes a second communication connection (Bluetooth connection) with the first communication module.

For example, the second communication connection may be the Bluetooth connection (BR connection), to provide a signaling transmission channel for security authentication.

S404: The first communication module sends a message indicating to start to a screen casting assistant.

S405: Start the screen casting assistant.

S406: The second communication module returns a message indicating that the second communication connection is successfully established to the message center module.

S407: The message center module sends a message indicating to start to the second screen casting service module.

S408: Start the second screen casting service module.

S409: The second screen casting service module returns a message indicating that the starting is successful to the message center module.

It should be noted that, in this case, the screen casting assistant on the mobile phone end and the second screen casting service module on the PC end are already started, to provide a necessary function for a subsequent screen casting service.

In some embodiments, as shown in FIG. 15, the method further includes the following steps.

S501: The message center module sends a security authentication request to the second security authentication module of the PC.

S502: The second security authentication module controls the display screen of the PC to display a security authentication window.

For example, the security authentication interface is displayed in the screen casting window 201, and the user may enter the password in the security authentication window.

It may be understood that, a security authentication manner is not limited to entering the password for security authentication. For example, in a fingerprint unlock scenario, a fingerprint is collected to perform verification, and in a voice unlock scenario, a voice is collected for verification. This is not limited herein, and password unlocking is merely used as an example.

S503: The second security authentication module receives the password entered by the user through the security authentication window.

S504: The second security authentication module sends the password to the second communication module.

S505: The second communication module sends the password to the first communication module based on the second communication connection.

S506: The first communication module sends the password to the first security authentication module of the mobile phone.

It may be understood that, the security authentication manner may alternatively be fingerprint authentication performed by the user by entering a fingerprint, voice authentication performed by the user by inputting a voice, or the like. This is not limited. The first security authentication module receives the password collected on the PC end, compares the password with an unlock password set by the user on the mobile phone end, and if the password collected on the PC end matches with the unlock password set on the mobile phone end, the authentication succeeds; otherwise, the authentication fails.

S507: The first security authentication module successfully performs password authentication.

If the password authentication on the mobile phone end succeeds, a password authentication success result is returned to the PC end. If the password authentication on the mobile phone end fails, a password authentication failure result is returned to the PC end. Optionally, the PC end receives the password authentication failure result, provides a prompt indicating that a password error occurs in the security authentication window to the user, and then initiates the security authentication request again to the mobile phone end for password verification after the user re-enters the password. Certainly, it may be set that authentication is suspended if a quantity of authentication failures exceeds a password error quantity threshold, and the password error quantity threshold may be set by the user or may be a default value.

S508: The first security authentication module sends a message indicating that the authentication succeeds to the first communication module.

S509: The first communication module sends, based on the second communication connection, the message indicating that the authentication succeeds to the second communication module.

S510: The second communication module sends the message indicating that the authentication succeeds to the second security authentication module.

S511: The second security authentication module sends the message indicating that the authentication succeeds to the message center module.

S512: The message center module controls the display screen to display the transition loading window.

It may be understood that, application screen casting steps of FIG. 11 to FIG. 12 are enabled when the authentication succeeds, successful application screen casting needs specific time. Therefore, there is a specific time span between display of the security authentication window and display of the application screen casting window. Optionally, to improve impression and experience of the user, the transition loading window may be started for display on the target device after the security authentication succeeds, to provide a prompt indicating that the security authentication already succeeds and that the application screen casting is being started to the user. When the application screen casting is successfully started through the application screen casting steps of FIG. 11 to FIG. 12, the transition loading interface displayed in the screen casting window 201 is switched to the application interface.

In some other embodiments, the target device first determines, after receiving that the user indicates the corresponding source device to start application screen casting, whether security authentication is needed, for example, whether the source device performs screen casting to the target device for the first time; for another example, whether the source device is set with an unlock password. For details, refer to the descriptions in foregoing embodiments.

The describes in detail the screen casting method and the electronic device provided in the embodiments of this application. It may be understood that, to implement the functions, the electronic device includes corresponding hardware and/or software modules for performing the functions. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by the computer software depends on particular applications and design constraint conditions of the technical solutions. A person skilled in the art may use different methods to implement the described functions with reference to embodiments for each particular application, but it should not be considered that the implementation goes beyond the scope of this application.

In this embodiment of this application, functional modules of the electronic device may be divided based on the method example. For example, each functional module may be divided based on each function, such as a detection unit, a processing unit, and a display unit, or two or more functions may be integrated into one module. The integrated module may be implemented in a form of hardware, or may be implemented in a form of software functional module. It should be noted that, module division in this embodiment of this application is an example, and is merely logical function division. During actual implementation, there may be another division manner.

It should be noted that, all related content of the steps related to foregoing method embodiments may be quoted to the functional descriptions of the corresponding functional modules. Details are not described herein again.

The electronic device provided in this embodiment is configured to perform the screen casting method. Therefore, the effect may be the same as the effect of the implementation method.

When an integrated unit is used, the electronic device may further include a processing module, a storage module, and a communication module. The processing module may be configured to control and manage an action of the electronic device. The storage module may be configured to support the electronic device in executing stored program code, data, and the like. The communication module may be configured to support communication between the electronic device and another device.

The processing module may be a processor or a controller. The processing module may implement or execute various example logical blocks, modules, and circuits described with reference to content disclosed in this application. The processor may also be a combination for implementing computing functions, for example, a combination of one or more microprocessors, a combination of digital signal processing (digital signal processing, DSP) and microprocessors, or the like. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the electronic device in this embodiment may be a device having the structure shown in FIG. 9.

An embodiment of this application further provides a computer-readable storage medium. The computer-readable storage medium stores a computer program, and the computer program, when executed by a processor, enables the processor to perform the screen casting method in any one of the embodiments.

An embodiment of this application further provides a computer program product. When the computer program product runs on a computer, the computer is enabled to perform the related steps, to implement the screen casting method in the embodiments.

In addition, an embodiment of this application further provides an apparatus. The apparatus may be specifically a chip, a component, or a module. The apparatus may include a processor and a memory that are connected to each other. The memory is configured to store computer-executable instructions, and when the apparatus is run, the processor may execute the computer-executable instructions stored in the memory, so that the chip performs the incoming call display method in the method embodiments. The electronic device, the computer-readable storage medium, the computer program product, or the chip provided in this embodiment may be configured to perform the corresponding method provided above. Therefore, for beneficial effects that can be achieved, refer to the beneficial effects of the corresponding method provided above. Details are not described herein again.

Through the descriptions of the implementations, a person skilled in the art may clearly understand that, for the purpose of convenient and brief description, only division of the functional modules is used as an example for description. In actual application, the functions may be allocated to and completed by different functional modules according to requirements. In other words, an internal structure of an apparatus is divided into different functional modules to complete all or some of the functions described above.

In several embodiments provided in this application, it should be understood that, the disclosed apparatus and method may be implemented in another manner. For example, described apparatus embodiment is merely an example. For example, module or unit division is merely a logical function division and may be have another division manner in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located at one place, or may be distributed in a plurality of different places. Some or all of the units may be selected based on actual requirements to implement the objectives of the solutions of this embodiment.

In addition, functional units in this embodiment of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in this embodiment of this application essentially, or the part contributing to the conventional art, or all or some of the technical solutions may be implemented in the form of a software product. The software product is stored in a storage medium and includes several instructions for indicating a device (which may be a single-chip microcomputer, a chip, or the like) or a processor (processor) to perform all or some of the steps of the methods described in this embodiment of this application. The storage medium includes: any medium that can store program code, such as a USB flash drive, a removable hard disk, a read-only memory (read only memory, ROM), a random access memory (random access memory, RAM), a magnetic disk, a compact disc, or the like. The descriptions and embodiments are merely intended to describe the technical solutions of this application, rather than limit this application. Although this application is described in detail with reference to foregoing embodiments, a person of ordinary skill in the art should understand that modifications can still be made to the technical solutions described in foregoing embodiments or equivalent replacements can be made to some technical features thereof, without departing from the scope of the technical solutions of this embodiment of this application.

## Claims

1. A screen casting method, applicable to a first device and a second device, the method comprising:
displaying, by the second device, a first window after the first device performs screen casting to the second device;
displaying, by the second device, first image information from the first device in the first window when the first device is in a screen-on state, wherein the first image information corresponds to an application interface of a first application in the first device; and
displaying, by the second device, second image information from the first device in the first window after the first device switches to a lock screen state or a screen-off state, wherein the second image information also corresponds to the application interface of the first application in the first device.

2. The method according to claim 1, wherein after the first device switches to a lock screen state or a screen-off state, the method further comprises:
configuring, by the first device, the first application to not enter a sleep mode in a life cycle, and configuring the application interface of the first application to be allowed to be drawn in a first display area in the life cycle, wherein the first display area is an invisible display area in the first device; and
sending, by the first device, second image information of the first application to the second device, to instruct the second device to display the second image information in the first window, wherein the second image information is data drawn in the first display area.

3. The method according to claim 1 or 2, wherein before the first device performs screen casting to the second device, the method further comprises:
receiving, by the first device, a first message of the first application;
forwarding, by the first device, the first message to the second device;
displaying, by the second device, a first control, wherein the first control is configured to display the first message;
sending, by the second device, a first request to the first device in response to an operation of a user on the first control, wherein the first request comprises a first identifier of the first application; and
starting, by the first device, screen casting to the second device in response to the first request.

4. The method according to claim 3, wherein after the starting screen casting to the second device, the method further comprises:
creating, by the first device, the first display area, and starting the first application;
generating, by the first device, the first image information based on image data in the first display area after the application interface of the first application is drawn in the first display area; and
sending, by the first device, the first image information to the second device.

5. The method according to claim 4, wherein before the starting the first application, the method further comprises:
marking, by the first device, the first application with a first flag; and
before the configuring, by the first device, the first application to not enter a sleep mode in a life cycle, and configuring the application interface of the first application to be allowed to be drawn in a first display area in the life cycle, the method further comprises:
determining, by the first device, that the first application has the first flag.

6. The method according to claim 2, wherein before the first device switches to a lock screen state or a screen-off state, the method further comprises:
in response to an operation of a user indicating to lock the screen or turn off the screen, controlling, by the first device, to power off only a display screen of the first device, or displaying only a lock screen layer on the display screen, wherein a service running state corresponding to the display screen remains unchanged.

7. The method according to claim 2, wherein the first display area is marked with a second flag, and before the first device switches to a lock screen state or a screen-off state, the method further comprises:
determining, when the first device detects that a condition that the screen is automatically off is satisfied, that the first display area has the second flag; and
controlling, by the first device, to power off only a display screen of the first device, or displaying only a lock screen layer on the display screen, wherein a service running state corresponding to the display screen remains unchanged.

8. The method according to claim 2, wherein before the first device switches to a lock screen state or a screen-off state, the method further comprises:
determining, by the first device, not to draw a lock screen layer in the first display area.

9. The method according to claim 2, wherein before the first device switches to a lock screen state or a screen-off state, the method further comprises:
determining, by the first device, that the first display area does not mirror content in a second display area, wherein the second display area is a visible display area in the first device.

10. A screen casting method, applicable to a first device, the method comprising:
performing, by the first device, screen casting to a second device;
sending, by the first device when the first device is in a screen-on state, first image information corresponding to a first application to the second device, to indicate the second device to display the first image information in a first window; and
sending, by the first device, second image information corresponding to the first application to the second device after the first device switches to a lock screen state or a screen-off state, to indicate the second device to display the second image information in the first window, wherein both the first image information and the second image information are application interfaces of the first application.

11. The method according to claim 10, wherein after the first device switches to a lock screen state or a screen-off state, the method further comprises:
configuring, by the first device, the first application to not enter a sleep mode in a life cycle, and configuring the application interface of the first application to be allowed to be drawn in a first display area in the life cycle, wherein the first display area is an invisible display area in the first device; and
generating, by the first device, the second image information based on content drawn in the first display area.

12. The method according to claim 10 or 11, wherein before the performing, by the first device, screen casting to a second device, the method further comprises:
receiving, by the first device, a first message of the first application;
forwarding, by the first device, the first message to the second device; and
starting screen casting to the second device after receiving a first request sent by the second device, wherein the first request is request information for performing screen casting for the first application, and the first request carries a first identifier of the first application.

13. The method according to claim 12, wherein before the sending, by the first device, first image information corresponding to a first application to the second device, the method further comprises:
creating, by the first device, the first display area, and starting the first application; and
generating, by the first device, the first image information based on image data in the first display area after the application interface of the first application is drawn in the first display area.

14. The method according to claim 13, wherein before the starting the first application, the method further comprises:
marking, by the first device, the first application with a first flag; and
before the configuring, by the first device, the first application to not enter a sleep mode in a life cycle, and configuring the application interface of the first application to be allowed to be drawn in a first display area in the life cycle, the method further comprises:
determining, by the first device, that the first application has the first flag.

15. The method according to claim 11, wherein before the first device switches to a lock screen state or a screen-off state, the method further comprises:
in response to an operation of a user indicating to lock the screen or turn off the screen, controlling, by the first device, to power off only a display screen of the first device, or displaying only a lock screen layer on the display screen, wherein a service running state corresponding to the display screen remains unchanged.

16. The method according to claim 11, wherein the first display area is marked with a second flag, and before the first device switches to a lock screen state or a screen-off state, the method further comprises:
determining, when the first device detects that a condition that the screen is automatically off is satisfied, that the first display area has the second flag; and
controlling, by the first device, to power off only a display screen of the first device, or displaying only a lock screen layer on the display screen, wherein a service running state corresponding to the display screen remains unchanged.

17. The method according to claim 11, wherein before the first device switches to a lock screen state or a screen-off state, the method further comprises:
determining, by the first device, not to draw a lock screen layer in the first display area.

18. The method according to claim 11, wherein before the first device switches to a lock screen state or a screen-off state, the method further comprises:
determining, by the first device, that the first display area does not mirror content in a second display area, wherein the second display area is a visible display area in the first device.

19. An electronic device, comprising one or more processors and a memory, wherein the memory is coupled to the processor, the memory is configured to store computer program code, the computer program code comprises computer instructions, and when the one or more processors execute the computer instructions, the one or more processors are configured to perform the method according to any one of claims 10 to 18.

20. A computer storage medium, comprising computer instructions, wherein the computer instructions, when run on an electronic device, causing the electronic device to perform the method according to any one of claims 10 to 18.
